# EUROPEAN PATENT SPECIFICATION

(11) **EP 3 870 664 B1**
(45) Date of publication and mention of the grant of the patent: **07.08.2024**
(21) Application number: 19789718.4
(22) Date of filing: 24.10.2019
(51) Int. Cl.: C09D 171/00, C09D 171/02, C08G 65/332, C08G 65/337

(54) **POLYACRYLIC PFPE DERIVATIVES**
POLYACRYL-PFPE-DERIVATE
DÉRIVÉS DE PFPE POLYACRYLIQUE

(30) Priority: 26.10.2018 EP 18202808
(43) Date of publication of application: 01.09.2021
(73) Proprietor: Solvay Specialty Polymers Italy S.p.A., 20021 Bollate (MI) (IT)
(72) Inventor: SIMEONE, Giovanni, 20020 Solaro MI (IT); GUARDA, Pier Antonio, 20020 ARESE MI (IT)
(74) Representative: Benvenuti, Federica
(86) International application number: PCT/EP2019/079033
(87) International publication number: WO 2020/084054

(56) References cited:
- EP-A2- 0 622 353
- WO-A1-2017/014145
- WO-A1-2017/108852

## Description

### Cross-reference to related applications

This application claims priority from EP No. 18202808.4 filed on October 26, 2018.

### Technical Field

The present invention relates to polyacrylic (per)fluoropolyether polymers derivatives obtained using controlled radical polymerization technologies and to their use as additives in coating compositions.

### Background Art

The provision of a coating on a substrate may generally be desirable for a variety of reasons including protection of the substrate and provision of desirable surface characteristics which the substrate material does not exhibit to the required degree.

Materials that have been used to date for surface protection include fluoropolymers. Fluoropolymers provide advantages over conventional hydrocarbon based materials in terms of high chemical inertness (solvent, acid, and base resistance), dirt and stain resistance (due to low surface energy), low moisture absorption, and resistance to weather and solar conditions.

Fluoropolymer compositions are used as additives in the preparation of a wide variety of surface treatment materials to provide surface effects to substrates. Many such compositions are fluorinated acrylate polymers or copolymers.

US 2011/0293943 (DU PONT DE NEMOURS AND COMPANY) discloses a composition comprising a fluoropolymer and its use as an additive to coating compositions such as alkyd paints or polymeric resins, to provide durable surface effects. In particular, the compositions disclosed in this patent application comprise solvent-based fluoroalkyl (meth)acrylate copolymers with short (per)fluoroalkyl groups of 6 or less carbon atoms, notably from 2 to 6 carbon atoms. When used as an additive to a coating base, which is a solvent-based paint, the fluoropolymer composition of the invention is generally added at about 0.001 wt.% to about 1 wt.% on a dry weight basis of the fluoropolymer of the weight of the wet paint, more preferably from about 0.01 wt.% to about 0.5 wt.%.

Block co-polymers comprising a fluorinated block derived from Krytox^{®}, a monofunctional perfluoropolyethers (PFPE) polymer commercially available from DuPont of formula CF₃(CF₂)₂O-[CF(CF₃)CF₂O]-CF(CF₃)CH₂OH, have been disclosed by ZHANG, Zhou, et al. Honeycomb Films from Perfluoropolyether-based Star and Micelle Architecture. Australian Journal of Chemistry. 2012, vol.65, p.1186-1190 and WOODS, Helen, et al. Dispersion Polymerization of Methyl Methacrylate in Supercritical Carbon Dioxide: an Investigation into Stabilizer Anchor Group. Macromolecules. 2005, vol.38, p.3271-3282.

However, one of the recognized limitations of said fluoroalkyl (meth)acrylate copolymers is the low compatibility with hydrogenated materials, which sometimes hampers their use as reactive additives/building blocks in formulations for surface treatment.

WO 2017/014145 (DAINIPPON INK & CHEMICALS) 26/01/2017 discloses PFPEs of formula PFPE[CF₂CH₂CH₂O-C(=O)-C(CH₃)₂-Br]₂ for use as radical initiators in the preparation of films of perfluoropolyether compounds characterized by excellent water and liquid repellency.

However, the perfluoropolyethers disclosed in this document and the films obtained therefrom have such poor resistance properties to hydrolysis, as to make them unsuitable to the application as coatings.

The present invention addresses the issues described above by introducing novel polyacrylic (per)fluoropolyether polymers.

They are utilized as coating additives and impart unexpectedly desirable surface effects such as: uniform spreading, increased water and oil contact angles, enhanced cleanability to the coated film and air-cured coated surface, enhanced solubility in hydrogenated solvents and resistance to hydrolysis.

WO 2017/108852 (Solvay Specialty Polymers Italy S.p.A**.)** describes derivatives of (poly)alkoxylated (per)fluoropolyethers comprising unsaturated end groups bearing acrylate, allylic or vinylic moieties. The unsaturated moieties are preferably selected from the following:

(U-I) -C(=O)-CR_{H}=CH₂

(U-II) -C(=O)-NH-CO-CR_{H}=CH₂

(U-III) -C(=O)-R^{A}-CR_{H}=CH₂

(U-IV) -R_{H1}-CH=CH₂.

EP 0622353 (Ausimont S.p.A.) discloses coatings based on perfluoropolyether terminated with acrylic groups and containing ethoxylix groups as a connecting bridge between the fluorinated part and the (meth)acrylic group. The perfluoropolyether polymers comply with the following chemical structure:

YCF₂OR_{f}CFXCH₂(OCH₂CH₂)ₚOCOCR=CH₂

wherein R is H or -CH₃.

### Summary of invention

The Applicant has surprisingly found that novel (per)fluoropolyether polymers comprising acrylate monomers and oxyalkylene units are characterized by improved solubility in hydrogenated solvents, improved resistance to hydrolysis and improved compatibility with several materials.

Thus, in a first aspect, the present invention relates to a (per)fluoropolyether polymer [polymer (PFPE_{A})] comprising:
- at least one (per)fluoropolyoxyalkylene chain [chain (R_{f})] having two chain ends;
- at least one (poly)oxyalkylene chain [chain (Rₐ)] bonded to at least one chain end of said chain (R_{f}), said chain (Rₐ) comprising at least one fluorine-free oxyalkylene unit; and
- at least one (meth)acrylic monomer recurring unit [unit (MA)] of formula (I): 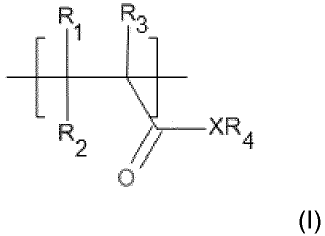 wherein:
   - R₁, R₂ and R₃, equal to or different from each other, are independently selected from a hydrogen atom and a C₁-C₃ hydrocarbon group;
   - X is an oxygen atom, a sulfur atom or, a group NR₈ wherein R₈ is selected from a hydrogen atom and a C₁-C₃ hydrocarbon group;
   - R₄ is a hydrogen atom or a C₂-C₂₀ hydrocarbon chain moiety, wherein said C₂-C₂₀ hydrocarbon chain moiety optionally comprises at least one functional group (FG);

   wherein said at least one unit (MA) is bonded to said at least one chain (Rₐ) via a linking group (LG) of formula

      *-(C=O)-R₅-**
   wherein R₅ is a C₁-C₈ alkylene or cycloalkylene group having at least one secondary or tertiary carbon atom,
   symbol (*) indicates the bond to said chain (Rₐ), and
   symbol (**) indicates the bond to said units (MA) through said secondary or tertiary carbon atom.

Advantageously, the novel polymers according to the present invention comprise both a hydrophobic segment, i.e. chain (R_{f}), a hydrophilic hydrogenated spacer, i.e. chain (Rₐ), and a (meth)acrylic segment, i.e units (MA), that can bear different functional groups, so that the novel polymers (PFPE_{A}) as defined above can be used in several applications wherein the functional group can be used to tune the properties of the polymer or can be used as intermediates in the synthesis of further polymers.

In addition, the Applicant also found that these novel (per)fluoropolyether polymers can be advantageously obtained via atom transfer radical polymerization (ATRP) from certain novel PFPE macroinitiators.

In a second aspect, the present invention is thus directed to a process for manufacturing polymer (PFPE_{A}) as above defined, said process comprising:
a) providing a PFPE macroinitiator [polymer (PFPE_{I})] comprising:
   - at least one (per)fluoropolyoxyalkylene chain [chain (R_{f})] having two chain ends;
   - at least one (poly)oxyalkylene chain [chain (Rₐ)] bonded to at least one end of said chain (R_{f}), said chain (Rₐ) comprising at least one fluorine-free oxyalkylene unit; and
   - at least one group of formula -(C=O)-R₅-X', wherein R₅ is a C₁-C₈ alkylene or cycloalkylene group including at least one secondary or tertiary carbon atom and X' is a halogen, wherein the halogen is bonded to R₅ via said at least one secondary or tertiary carbon atom;
b) reacting the polymer (PFPEi) provided in step a) by atom transfer radical polymerisation (ATRP) with at least one (meth)acrylic monomer [monomer (MM)] of formula (II): 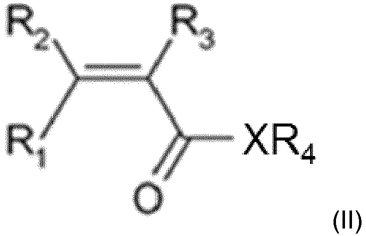 wherein:
   - R₁, R₂ and R₃, equal to or different from each other, are independently selected from a hydrogen atom and a C₁-C₃ hydrocarbon group;
   - X is an oxygen atom, a sulphur atom or a group NR₈ wherein R₈ is selected from a hydrogen atom and a C₁-C₃ hydrocarbon group;
   - R₄ is a hydrogen atom or a C₂-C₂₀ hydrocarbon chain moiety, wherein said C₂-C₂₀ hydrocarbon chain moiety optionally comprises at least one functional group (FG);
   in the presence of at least one transition metal catalyst to obtain a polymer (PFPE_{A}); and
c) purifying the polymer (PFPE_{A}) obtained in step b).

The Applicant noted that polymer (PFPE_{I}) as provided in step (a) of the process according to the present invention is novel.

Thus, in a third aspect, the present invention relates to a PFPE macroinitiator [polymer (PFPE_{I})] comprising:
- at least one (per)fluoropolyoxyalkylene chain [chain (R_{f})];
- at least one (poly)oxyalkylene chain [chain (Rₐ)] bonded to at least one side of said chain (R_{f}), said chain (Rₐ) comprising at least one fluorine-free oxyalkylene unit; and
- at least one group of formula -(C=O)-R₅-X', wherein R₅ is a C₁-C₈ alkylene or cycloalkylene group including at least one secondary or tertiary carbon atom and X' is a halogen, wherein the halogen is bonded to R₅ via said at least one secondary or tertiary carbon atom.

The Applicant has found out that polymers (PFPE_{I}) are more resistant to hydrolysis than the compounds known in the art not comprising the oxyalkylene units as above defined. As a consequence, also polymers (PFPE_{A}) obtained by reaction of polymers (PFPE_{I}) according to the present invention are more resistant to hydrolysis than the compounds known in the art not comprising the oxyalkylene units as above defined.

In a further aspect, the present invention relates to a composition [composition S] comprising from 1 to 90 wt% based on the total weight of said composition, of at least one polymer (PFPE_{A}) as defined above, and at least one solvent.

In a further aspect, the present invention relates to the use of said composition (S) for coating at least one surface of a substrate, said substrate being preferably selected from glass, plastic and metal.

In still a further aspect, the present invention relates to a method for coating at least one surface of a substrate, preferably selected from plastic, metallic or glass, said method comprising:
(i) contacting a substrate with said composition (S) and
(ii) drying said composition (S) onto said substrate.

### Description of embodiments

For the purpose of the present description and of the following claims:
- the use of parentheses around symbols or numbers identifying the formulae, for example in expressions like "chain (R_{f})", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural from, depending on the context;
- the term "(per)fluoropolyether" is intended to indicate fully or partially fluorinated polyether.

Preferably, said chain (R_{f}) is a (per)fluoropolyoxyalkylene chain having an average number molecular weight Mₙ ranging from 100 to 8,000, preferably from 300 to 6,000, more preferably from 800 to 3,000, and comprising, preferably consisting of, repeating units, which may be equal to or different from one another, selected from:
(i) -CFY'O-, wherein Y' is F or CF₃,
(ii) -CFY'CFY'O-, wherein Y', equal or different at each occurrence, is as above defined, with the proviso that at least one of Y' is - F,
(iii) -CF₂CF₂CW₂O-, wherein each of W, equal or different from each other, are F or H,
(iv) -CF₂CF₂CF₂CF₂O-,
(v) -(CF₂)ⱼ-CFZ'-O- wherein j is an integer from 0 to 3 and Z' is a group of general formula -OR_{f}'T, wherein R_{f}' is a fluoropolyoxyalkene chain comprising a number of repeating units from 0 to 10, said recurring units being chosen among the followings : -CFY"O- , -CF₂CFY"O-, - CF₂CF₂CF₂O-, -CF₂CF₂CF₂CF₂O-, with each of each of Y" being independently F or CF₃ and T being a C₁-C₃ perfluoroalkyl group.

Preferably, said chain (R_{f}) complies with the following formula:

(R_{f}-I)

- [(CFX¹O)_{g1}(CFX²CFX³O)_{g2}(CF₂CF₂CF₂O)_{g3}(CF₂CF₂CF₂CF₂O)_{g4}]-wherein
- X¹ is independently selected from -F and -CF₃,
- X², X³, equal or different from each other and at each occurrence, are independently -F, -CF₃, with the proviso that at least one of X¹ to X³ is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, said chain (R_{f}) is selected from chains of formula:

(R_{f}-IIA) -[(CF₂CF₂O)ₐ₁(CF₂O)ₐ₂]-

wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;

(R_{f}-IIB) -[(CF₂CF₂O)_{b1}(CF₂O)_{b2}(CF(CF₃)O)_{b3}(CF₂CF(CF₃)O)_{b4}]-

wherein:
b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;

(R_{f}-IIC) -[(CF₂CF₂O)_{c1}(CF₂O)_{c2}(CF₂(CF₂)_{cw}CF₂O)_{c3}]-

wherein:
cw = 1 or 2;
c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2;

(R_{f}-IID) -[(CF₂CF(CF₃)O)_{d}]-

wherein:
d is an integer > 0 such that the number average molecular weight is between 400 and 10,000, preferably between 400 and 5,000;

(R_{f}-IIE) -[(CF₂CF₂C(Hal*)₂O)ₑ₁-(CF₂CF₂CH₂O)ₑ₂-(CF₂CF₂CH(Hal*)O)ₑ₃]-

wherein:
- Hal*, equal or different at each occurrence, is a halogen selected from fluorine and chlorine atoms, preferably a fluorine atom;
- e1, e2, and e3, equal to or different from each other, are independently integers ≥ 0 such that the (e1+e2+e3) sum is comprised between 2 and 300.

Still more preferably, said chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 10,000, preferably between 400 and 5,000, with the ratio a1/a2 being generally comprised between 0.1 and 10, more preferably between 0.2 and 5.

Preferably, said chain (Rₐ) is a polyoxyalkylene chain free from fluorine atoms, said chain comprising from 1 to 50 fluorine-free oxyalkylene units, said units being the same or different from one another and having the general formula: 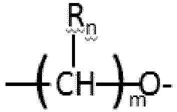 wherein Rₙ is at each occurrence independently a hydrogen, a lower alkyl or a lower alkoxy group, and m is an integer from 1 to 10.

The term "lower alkyl" refers to alkyl groups having 1 to about 6 carbon atoms and includes primary, secondary and tertiary alkyl groups. Typical lower alkyl groups include, for example, methyl, ethyl, n-propyl, isopropyl, n-butyl, sec-butyl, t-butyl, n-pentyl, n-hexyl and the like.

The term "lower alkoxy" refers to a group -O-lower alkyl. Typical lower alkoxy groups include methoxy, ethoxy, and the like.

More preferably, said free oxyalkylene units are selected from -CH₂CH₂O-and -CH₂CH(J)O-, wherein J is a straight or branched alkyl or aryl, preferably methyl, ethyl or phenyl.

Typically, in the (PFPE_{A}) of the present invention, chain Rₐ complies with formula (Rₐ-I) below:

(Rₐ-I) -(CH₂CH₂O)ᵣ(CH₂CH(CH₃)O)ₛ(CH₂CH(CH₂CH₃)O)ₜ(CH₂CH(Ph)O)ᵤ-

wherein r, s, t and u are independently selected from 0 and a positive number, with r+s+t+u ranging from 1 to 50, preferably from 1 to 15, more preferably from 1 to 10.

In one preferred embodiment, in chain (Rₐ-I), r is a positive number ranging from 1 to 15, preferably from 1 to 10, s, t and u are 0.

In another preferred embodiment, r, t and u are 0, s is a positive number ranging from 1 to 15, preferably from 1 to 10.

In another preferred embodiment, r and s are positive numbers and t and u are 0, r+s ranges from 1 to 15, preferably from 1 to 10.

When two or more of the -CH₂CH₂O-, -CH₂CH(CH₃)O-, - CH₂CH(CH₂CH₃)O- and -CH₂CH(Ph)O- units are present in chain (Rₐ-I), they can be arranged in blocks or they can be randomly disposed.

The term "(meth)acrylic" refers to moieties including acrylates, methacrylates, acrylamides, methacrylamides, thioacrylates and thiomethacrylates.

Units (MA) in polymer (PFPE_{A}) derive from (meth)acrylic monomers (MM) of formula (II) as above defined through the process of the invention.

Depending on the nature of group R₄, units (MA) of formula (I) may be ionisable or non-ionizable.

According to the present invention, an ionizable group is a group capable of forming an ionic group, such as carboxy acid, phosphates, sulphides, amines, and the like.

In particular, when R₄ is a hydrogen atom, the group -X-R₄ of unit (MA) can form an ionic group -X- in suitable conditions to give improved solubility of the polymer (PFPE_{A}) in certain solvents.

When R₄ is a C₂-C₂₀ hydrocarbon chain moiety comprising at least one functional group (FG), the functional group (FG) may be an ionisable or a non-ionizable functional group. In the case an ionisable functional group (FG) is comprised in the C₂-C₂₀ hydrocarbon chain moiety, said functional group (FG) may be form an ionic group in suitable conditions to give improved solubility of the polymer (PFPE_{A}) in certain solvents.

A "functional unit (f-MA)" is defined in the present invention as a (meth)acrylic monomer recurring unit of formula (I) wherein R₄ is a C₂-C₂₀ hydrocarbon chain moiety comprising at least one functional group (FG); a "non-functional unit (nf-MA)" is defined in the present invention as a (meth)acrylic monomer recurring unit of formula (I) wherein R₄ is a hydrogen atom or a C₂-C₂₀ hydrocarbon chain moiety not comprising any functional group (FG).

Non-limiting examples of suitable functional groups (FG) include hydroxyl groups, ether groups, oxyalkylene groups, polyoxyalkylene groups, carboxylic acid groups, amine groups, amide groups, halogen containing groups, including fluoro and perfluoro groups, halogen atoms, phosphate groups, ester groups, siloxane groups and polysiloxane groups, as long as those FG are compatible with the overall formation of the polymer (PFPE_{A}).

Non-limitative examples of non-functional units (nf-MA) include those notably deriving from (meth)acrylic monomers (MM):
- acrylic acid (AA)
- methacrylic acid,
- methyl methacrylate (MMA),
- ethyl methacrylate,
- butyl methacrylate (BMA),
- hexyl methacrylate,
- benzyl methacrylate (BzMA),
- lauryl methacrylate,
- stearyl methacrylate.

More preferably, the non-functional units (nf-MA) include those deriving from acrylic acid (AA), methylmethacrylate (MMA), ethylmetacrylate (EMA) and the like.

Suitable functional units (f-MA) include those notably deriving from (meth)acrylic monomers (MM):
- hydroxyethylacrylate (HEA), hydroxyethylmethacrylate (HEMA), 2-hydroxypropyl acrylate (HPA), hydroxyethylhexyl(meth)acrylate, methacryloxypropyl-trimethoxysilane, methacryloxyethyl trimellitic anhydride, bis(2-methacryloxyethyl)phosphate, monoacryloxyethyl phosphate, 2-aminoethyl methacrylamide, n-(2-aminoethyl)methacrylamide, n-(3-aminopropyl)methacrylamide, 2-(t-butylamino)ethyl methacrylate, allyl methacrylate, 2-cyanoethyl methacrylate, n,n-diallylacrylamide, propargyl methacrylate, 2-carboxyethyl acrylate, 4-hydroxybutyl acrylate, and hydroxypropyl acrylate.

When two or more units (MA) are present in polymer (PFPE_{A}), they can be equal or different at each occurrence.

When different units (MA) are present in polymer (PFPE_{A}), they can be arranged in blocks or they can be randomly disposed.

The recurring units (MA) are bonded to the chain (Rₐ) via a linking group (LG) of formula:

*-(C=O)-R₅-**

wherein R₅ is a C₁-C₈ alkylene or cycloalkylene group having at least one secondary or tertiary carbon atom,
symbol (*) indicates the bond to said chain (Rₐ), and
symbol (**) indicates the bond to said units (MA) through said secondary or tertiary carbon atom.

In one preferred embodiment of the present invention the linking group (LG) typically complies with formula (LG-I) below:

(LG-I) *-(C=O)-C(R₆R₇)-**

wherein R₆ and R₇ are independently a hydrogen, a methyl or a benzyl group, with the proviso that R₆ and R₇ cannot be both hydrogen,
wherein symbol (*) and symbol (**) have the above defined meanings.

More preferably, the linking group (LG) complies with formula (LG-II) below:

(LG-II) *-(C=O)-C(CH₃)₂-**,

wherein symbol (*) and symbol (**) have the above defined meanings.

In one preferred embodiment of the present invention, polymer (PFPE_{A}) complies with formula (III) below:

A-O-R_{f}-(CF₂)ₓ-CFZ-CH₂-O-Rₐ-C(=O)-C(R₆R₇)-Y_{w}-Q (III)

wherein:
- R_{f} is a (per)fluoropolyoxyalkylene chain having an average number molecular weight Mₙ ranging from 100 to 8,000, preferably from 300 to 6,000, more preferably from 800 to 3,000, and comprising, preferably consisting of, repeating units, which may be equal to or different from one another, selected from:
   (i) -CFY'O-, wherein Y' is F or CF₃,
   (ii) -CFY'CFY'O-, wherein Y', equal or different at each occurrence, is as above defined, with the proviso that at least one of Y' is -F,
   (iii) -CF₂CF₂CW₂O-, wherein each of W, equal or different from each other, are F or H,
   (iv) -CF₂CF₂CF₂CF₂O-,
   (v) -(CF₂)ⱼ-CFZ'-O- wherein j is an integer from 0 to 3 and Z' is a group of general formula -OR_{f}'T, wherein R_{f}' is a fluoropolyoxyalkene chain comprising a number of repeating units from 0 to 10, said recurring units being chosen among the followings : -CFY"O- , -CF₂CFY"O-, - CF₂CF₂CF₂O-, -CF₂CF₂CF₂CF₂O-, with each of each of Y" being independently F or CF₃ and T being a C₁-C₃ perfluoroalkyl group;
- Z is fluorine or CF₃;
- x is 0 or 1,
   with the proviso that, when, x is 1, Z is F;
- Rₐ is a polyoxyalkylene chain free from fluorine atoms, said chain comprising from 1 to 50 fluorine-free oxyalkylene units, said units being the same or different from one another and being selected from - CH₂CH₂O- and -CH₂CH(J)O-, wherein J is a straight or branched alkyl or aryl, preferably methyl, ethyl or phenyl
- R₆ and R₇ are independently a hydrogen, a methyl or a benzyl group, with the proviso that R₆ and R₇ cannot be both hydrogen;
- Y, equal or different at each occurrence, is a unit (MA) of formula (I): 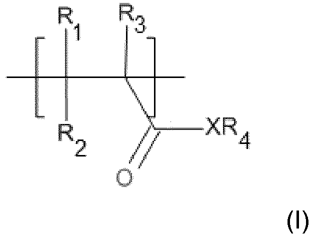
   wherein R₁, R₂, R₃, equal to or different from each other, are independently selected from a hydrogen atom and a C₁-C₃ hydrocarbon group; X is an oxygen atom, a sulphur atom, a group NR₈ wherein R₈ is selected from a hydrogen atom and a C₁-C₃ hydrocarbon group;
   and R₄ is a hydrogen atom or a C₂-C₂₀ hydrocarbon chain moiety possibly containing in the chain at least one functional group (FG);
- w is an integer from 1 to 200, preferably from 10 to 100, more preferably from 50 to 100;
- Q is a hydrogen or a halogen atom selected from chlorine, bromine and iodine;
- A is -Rₐ-C(=O)-C(R₆R₇)-Y_{w}-Q, wherein Rₐ, R₆, R₇, Y, w and Q are as defined above, or is a straight or branched C₁-C₄ (per)fluoroalkyl group wherein one fluorine atom can be substituted by one chlorine atom or one hydrogen atom.

According to a more preferred embodiment, the polymers (PFPE_{A}) are bifunctional polymers (PFPE_{A}) complying with formula (III) above wherein A is -Rₐ-C(=O)-C(R₆R₇)-Y_{w}-Q, with Rₐ, R₆, R₇, Y, w and Q being as defined above.

According to another preferred embodiment, the polymers (PFPE_{A}) are "monofunctional polymers (PFPE_{A})" complying with formula (III) above wherein A is a straight or branched C₁-C₄ (per)fluoroalkyl group wherein one fluorine atom can be substituted by one chlorine atom or one hydrogen atom.

Preferably, in polymer (PFPE_{A}) of formula (III), R_{f} complies with formulae (R_{f}-I), (R_{f}-IIA) to (R_{f}-IIE) or (R_{f}-III) as defined above, more preferably with formula (R_{f}-III).

In a preferred embodiment, in polymer (PFPE_{A}) of formula (III), Rₐ complies with formula (Rₐ-I) as above defined wherein r, s, t and u are independently selected from 0 and a positive number, with r+s+t+u ranging from 1 to 50, preferably from 1 to 15, more preferably from 1 to 10.

In another preferred embodiment, in polymer (PFPE_{A}) of formula (III), Rₐ complies with formula (Rₐ-I) as above defined wherein r is a positive number ranging from 1 to 15, preferably from 1 to 10, s, t and u are 0.

In another preferred embodiment, in polymer (PFPE_{A}) of formula (III), Rₐ complies with formula (Rₐ-I) as above defined wherein r, t and u are 0, s is a positive number ranging from 1 to 15, preferably from 1 to 10.

In yet another preferred embodiment, in polymer (PFPE_{A}) of formula (III), Rₐ complies with formula (Rₐ-I) as above defined wherein r and s are positive numbers and t and u are 0, r+s ranges from 1 to 15, preferably from 1 to 10.

In one embodiment of the present invention, polymers (PFPE_{A}) of the present invention are compounds of formula (III) as above defined wherein: A, R_{f}, Z, Rₐ, R₆, R₇, x, w and Q are as above defined;

Y is a unit (MA), preferably Y is a (MMA) unit and w is an integer from 1 to 100.

In one embodiment of the present invention, polymers (PFPE_{A}) of the present invention are compounds of formula:

R_{f}[CF₂CH₂O-(CH₂CH₂O)ₙ-C(=O)-C(CH₃)₂-(Y_{A})_{wa}-(Y_{B})_{wb}-Q]₂

wherein R_{f} and Q are as above defined;
Y_{A} is a first unit (MA): Y_{B} is a second unit (MA), different from Y_{A};
wa and wb are integers independently selected from 1 and 100, wherein Y_{A} and Y_{B} units can be arranged in blocks or they can be randomly disposed.

Preferred polymers (PFPE_{A}) according to this embodiment are polymers (PFPE_{A}) of formula:

R_{f}[CF₂CH₂O-(CH₂CH₂O)ₙ-C(=O)-C(CH₃)₂-(MMA)_{wa}-(HEMA)_{wb}-Q]₂

wherein R_{f} and Q are as above defined, wa and wb are integers independently selected from 1 and 100, wherein (MMA) and (HEMA) units can be arranged in blocks or they can be randomly disposed. Preferably, wa is an integer from 1 and 100 and wb is an integer from 1 and 10.

Preferred polymers (PFPE_{A}) according to this embodiment are also polymers (PFPE_{A}) of formula:

R_{f}[CF₂CH₂O-(CH₂CH₂O)ₙ-C(=O)-C(CH₃)₂-(MMA)_{wa}-(BzMA)_{wb}-Q]₂

wherein R_{f} and Q are as above defined, wa and wb are integers independently selected from 1 and 100, wherein (MMA) and (BzMA) units can be arranged in blocks or they can be randomly disposed. Preferably, wa is an integer from 1 and 100 and wb is an integer from 1 and 100.

In another embodiment of the present invention, polymers (PFPE_{A}) of the present invention are compounds of formula:

R_{f}[CF₂CH₂O-(CH₂CH₂O)ₙ-C(=O)-C(CH₃)₂-(Y_{A})_{wa}-(Y_{B})_{wb}-(Y_{C})_{wc}-Q]₂

wherein R_{f} and Q are as above defined;
Y_{A} is a first unit (MA); Y_{B} is a second unit (MA); Yc is a third unit (MA), wherein Y_{A}, Y_{B} and Y_{C} are different from each other;
wa, wb and wc are integers independently selected from 1 and 100, wherein Y_{A}, Y_{B} and Y_{C} units can be arranged in blocks or they can be randomly disposed.

Preferred polymers (PFPE_{A}) according to this embodiment are polymers (PFPE_{A}) of formula:

R_{f}[CF₂CH₂O-(CH₂CH₂O)ₙ-C(=O)-C(CH₃)₂-(MMA)_{wa}-(BMA)_{wb}-(HEMA)_{wc}-Q]₂

wherein R_{f} and Q are as above defined, wa, wb and wc are integers independently selected from 1 and 100, wherein (MMA), (BMA) and (HEMA) units can be arranged in blocks or they can be randomly disposed. Preferably, wa and wb are independently selected from integers from 1 and 100 and wc is an integer from 1 and 10.

Preferred polymers (PFPE_{A}) according to this embodiment are also polymers (PFPE_{A}) of formula:

R_{f}[CF₂CH₂O-(CH₂CH₂O)ₙ-C(=O)-C(CH₃)₂-(MMA)_{wa}-(BzMA)_{wb}-(HEMA)_{wc}-Q]₂

wherein R_{f} and Q are as above defined, wa, wb and wc are integers independently selected from 1 and 100, wherein (MMA), (BzMA) and (HEMA) units can be arranged in blocks or they can be randomly disposed. Preferably, wa and wb are independently selected from integers from 1 and 100 and wc is an integer from 1 and 10.

In greater detail and with particular reference to the process for manufacturing polymers (PFPE_{A}) according to the invention, this process comprises the following steps:
a) providing a PFPE macroinitiator [polymer (PFPE_{I})] comprising:
   - at least one (per)fluoropolyoxyalkylene chain [chain (R_{f})];
   - at least one (poly)oxyalkylene chain [chain (Rₐ)] bonded to at least one side of said chain (R_{f}), said chain (Rₐ) comprising at least one fluorine-free oxyalkylene unit; and
   - at least one group of formula *-(C=O)-R₅-X', wherein R₅ is a C₁-C₈ alkylene or cycloalkylene group including at least one secondary or tertiary carbon atom, X' is a halogen, wherein the halogen is bonded to R₅ via said secondary or tertiary carbon atom, symbol (*) indicates the bond to said chain (Rₐ);
b) reacting the initiator provided in step a) by atom transfer radical polymerisation (ATRP) with at least one (meth)acrylic monomer [monomer (MM)] of formula (II): 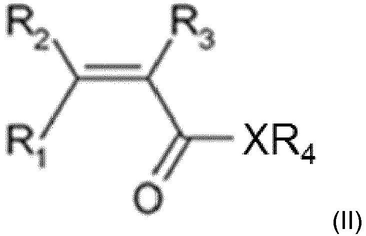
c) wherein R₁, R₂, R₃, equal to or different from each other, are independently selected from a hydrogen atom and a C₁-C₃ hydrocarbon group; X is an oxygen atom, a sulphur atom, a group NR₈ wherein R₈ is selected from a hydrogen atom and a C₁-C₃ hydrocarbon group;
   and R₄ is a hydrogen atom or a C₂-C₂₀ hydrocarbon chain moiety possibly containing in the chain at least one functional group (FG); in the presence of at least one transition metal catalyst and of a ligand to obtain a polymer (PFPE_{A}); and
d) purifying the polymer (PFPE_{A}) obtained in step b) to remove the at least one transition metal catalyst.

In step a) of the process, a polymer (PFPE_{I}) is provided wherein the at least one (per)fluoropolyoxyalkylene chain [chain (R_{f})] and the at least one (poly)oxyalkylene chain [chain (Rₐ)] are as above defined.

Preferably, the at least one group of formula *-(C=O)-R₅-X', wherein symbol (*) and R₅ are as above defined, complies with formula

*-(C=O)-C(R₆R₇)-X'

wherein R₆ and R₇ are independently a hydrogen, a methyl or a benzyl group, with the proviso that R₆ and R₇ cannot be both hydrogen, and X' is a chlorine, a bromine or a iodine atom.

More preferably, the at least one group of formula *-(C=O)-Rs-X' complies with formula *-(C=O)-C(CH₃)₂-Br,
wherein symbol (*) has the above defined meaning.

In one preferred embodiment of the present invention, polymer (PFPE_{I}) complies with formula (IV) below:

A-O-R_{f}-(CF₂)ₓ-CFZ-CH₂-O-Rₐ-C(=O)-C(R₆R₇)-X' (IV)

wherein:
- R_{f} is a (per)fluoropolyoxyalkylene chain having an average number molecular weight Mₙ ranging from 100 to 8,000, preferably from 300 to 6,000, more preferably from 800 to 3,000, and comprising, preferably consisting of, repeating units, which may be equal to or different from one another, selected from:
   (i) -CFY'O-, wherein Y' is F or CF₃,
   (ii) -CFY'CFY'O-, wherein Y', equal or different at each occurrence, is as above defined, with the proviso that at least one of Y' is -F,
   (iii) -CF₂CF₂CW₂O-, wherein each of W, equal or different from each other, are F or H,
   (iv) -CF₂CF₂CF₂CF₂O-,
   (v) -(CF₂)ⱼ-CFZ'-O- wherein j is an integer from 0 to 3 and Z' is a group of general formula -OR_{f}'T, wherein R_{f}' is a fluoropolyoxyalkene chain comprising a number of repeating units from 0 to 10, said recurring units being chosen among the followings : -CFY"O- , -CF₂CFY"O-, - CF₂CF₂CF₂O-, -CF₂CF₂CF₂CF₂O-, with each of each of Y" being independently F or CF₃ and T being a C₁-C₃ perfluoroalkyl group;
- Z is fluorine or CF₃;
- x is 0 or 1, with the proviso that, when, x is 1, Z is F;
- Rₐ is a polyoxyalkylene chain free from fluorine atoms, said chain comprising from 4 to 50 fluorine-free oxyalkylene units, said units being the same or different from one another and being selected from - CH₂CH₂O- and -CH₂CH(J)O-, wherein J is a straight or branched alkyl or aryl, preferably methyl, ethyl or phenyl
- R₆ and R₇ are independently a hydrogen, a methyl or a benzyl group, with the proviso that R₆ and R₇ cannot be both hydrogen;
- X' is a chlorine, a bromine or a iodine atom, preferably a bromine atom;
- A is -Rₐ-C(=O)-C(R₆R₇)-X', wherein Rₐ, R₆, R₇, and X' are as defined above, or is a straight or branched C₁-C₄ (per)fluoroalkyl group wherein one fluorine atom can be substituted by one chlorine atom or one hydrogen atom.

According to a more preferred embodiment, the polymers (PFPE_{I}) are bifunctional polymers (PFPEi) complying with formula (IV) above wherein A is -Rₐ-C(=O)-C(R₆R₇)-X', with Rₐ, R₆, R₇, and X' being as defined above.

According to a another preferred embodiment, the polymers (PFPE_{I}) are "monofunctional polymers (PFPEi)" complying with formula (IV) above wherein A is a straight or branched C₁-C₄ (per)fluoroalkyl group wherein one fluorine atom can be substituted by one chlorine atom or one hydrogen atom.

Preferably, in polymer (PFPE_{I}) of formula (IV), R_{f} complies with formulae (R_{f}-I), (R_{f}-IIA) to (R_{f}-IIE) or (R_{f}-III) as defined above, more preferably with formula (R_{f}-III).

In a preferred embodiment, in polymer (PFPE_{I}) of formula (IV), Rₐ complies with formula (Rₐ-I) as above defined wherein r, s, t and u are independently selected from 0 and a positive number, with r+s+t+u ranging from 1 to 50, preferably from 1 to 15, more preferably from 1 to 10.

In another preferred embodiment, in polymer (PFPE_{I}) of formula (IV), Rₐ complies with formula (Rₐ-I) as above defined wherein r is a positive number ranging from 1 to 15, preferably from 1 to 10, s, t and u are 0.

In another preferred embodiment, in polymer (PFPE_{I}) of formula (IV), Rₐ complies with formula (Rₐ-I) as above defined wherein r, t and u are 0, s is a positive number ranging from 1 to 15, preferably from 4 to 10.

In yet another preferred embodiment, in polymer (PFPE_{I}) of formula (IV), Rₐ complies with formula (Rₐ-I) as above defined wherein r and s are positive numbers and t and u are 0, r+s ranges from 1 to 15, preferably from 1 to 10.

Particularly preferred polymers (PFPEi) of the present invention are compounds of formula R_{f}[CF₂CH₂O-(CH₂CH₂O)ₙ-C(=O)-C(CH₃)₂-Br]₂.

Polymers (PFPEi) of the present invention can be manufactured by esterification reaction of (poly)alkoxylated (per)fluoropolyether polymers [polymer P*] with any appropriate esterification reactant (ER), wherein polymer P* denotes (per)fluoropolyether polymers comprising:
- at least one (per)fluoropolyoxyalkylene chain [chain (R_{f})] having two chain ends (R_{fe});
- at least one hydroxy-, alkoxy- or acyloxy- terminated (poly)oxyalkylene chain [chain (Rₐ)] bonded to at least one chain end (R_{fe}) of chain (R_{f}), said chain (R_{a'}) comprising at least one fluorine-free oxyalkylene unit, said units being the same or different from one another and having the general formula 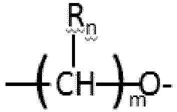 wherein Rₙ is at each occurrence independently a hydrogen, a lower alkyl or a lower alkoxy group, and m is an integer from 1 to 10, and the other end (R_{fe}) bears a chain (R_{a'}) as defined above or is a straight or branched C₁-C₄ (per)fluoroalkyl group wherein one fluorine atom can be substituted by one chlorine atom or one hydrogen atom.

Polymers P* are commercially available from Solvay Specialty Polymers (Italy) and can be obtained according to the method disclosed in WO 2014/090649 (SOLVAY SPECIALTY POLYMERS ITALY S.P.A.) or in WO 2016/020232 (SOLVAY SPECIALTY POLYMERS ITALY S.P.A.).

Suitable esterification reactant (ER) for the preparation of polymers (PFPE_{I}) of the present invention are acid halides, acid anhydrides, carboxylic acids or acid alkyl esters which bear at one end a secondary or tertiary carbon atom with a halide atom directly attached to said carbon atom.

When only one of said chain ends (R_{fe}) comprises a hydroxy-, alkoxy- or acyloxy terminated (poly)oxyalkylene chain (R_{a'}) and the other end (R_{fe}) bears a straight or branched C₁-C₄ (per)fluoroalkyl group wherein as defined above, the polymer is also referred to as "monofunctional polymer P*".

When both said chain ends (R_{fe}) comprise a hydroxyl-, alkoxy- or acyloxy - terminated (poly)oxyalkylene chain (Rₐ), the polymer is also referred to as "bifunctional polymer P*".

Examples of suitable acid halides are, notably, 2-bromoisobutyrate bromide, 2-bromo-2-methyl-butyric acid bromide, 2-chloro-2-methyl-butyric acid bromide, 2-bromoisobutyrate chloride, 2-bromo-2-methylbutyric acid chloride, 2-chloro-2-methylbutyric acid chloride, and the like.

Examples of suitable acid anhydrides are, notably, 2-bromoisobutyrate anhydride, 2-bromo-2-methyl-butyric anhydride, 2-chloro-2-methyl-butyric anhydride, etc. and the like.

Examples of suitable acid alkyl ester are, notably, ethyl 2-bromoisobutyrate, 2-bromo-2-methyl-ethyl butyrate, 2-chloro-2-methylethyl butyrate, 2-bromoisobutyric methyl butyrate, 2-bromo-2-methyl-butyric acid methyl, 2-chloro-2-methyl-butyric acid methyl, and the like.

Examples of suitable carboxylic acids are, notably, 2-bromoisobutyrate, 2-bromo-2-methylbutyric acid, 2-chloro-2-methyl butyrate and the like.

The reaction between the polymer P* and the esterification reactant (ER) may be carried out in a suitably organic solvent. Examples of suitable organic solvents are ketones, esters, amides, sulfoxides, ethers, hydrocarbons or fluorinated solvents. Examples of fluorinated solvents include, for example, Galden^{®} PFPEs, hydrofluoroethers (HFEs) including Novec^{®} HFEs, hydrofluorocarbons (HFCs), like Vertel^{®} or Fluorinert^{®}, and fluoroaromatic solvents like hexafluorobenzene and 1,3-hexafluoroxylene.

When using acid halides or acid anhydrides in the preparation of polymers (PFPE_{I}), it is preferable to add a basic compound such as triethylamine in order to neutralize by-products of the reaction such as hydrogen halides and carboxylic acid. The excess of basic compound can then be treated with an acid and the resulting reaction medium diluted with water.

The ratio between the polymer P* and the esterification reactant (ER) typically ranges from 1:2 to 1:10 mole/mole.

Reaction temperature of polymer P* and the esterification reactant (ER) is usually in the range from -40 to 60 °C. The reaction time is usually from 1 to 20 hours.

In step b) of the process, the polymer (PFPE_{I}) provided in step a) is reacted with at least one (meth)acrylic monomer in the presence of at least one transition metal catalyst via atom transfer radical polymerization (ARTP) according to methods known in the art. This method allows the controlled synthesis of polymers (PFPE_{A}) including at least one chain (R_{f}) linked to at least one chain (Rₐ) which is in turn bonded to at least one unit derived from at least one (meth)acrylic monomer with a well-defined architecture.

When two or more (meth)acrylic monomers are reacted with the polymer (PFPE_{I}), the recurring units (MA) derived from said at least two (meth)acrylic monomers can be arranged in blocks or they can be randomly disposed in polymer (PFPE_{A}).

Polymers (PFPE_{A}) including a block of units (MA) derived from a first monomer (MM) linked to the at least one chain (Rₐ) through the linking group (LG) as above defined and at least a second block of units (MA) derived from another and different monomer (MM) can be obtained by adding in sequence the at least two different monomers (MM) batch-wise to the reaction mixture.

Polymers (PFPE_{A}) including units (MA) randomly disposed and bonded to the at least one chain (Rₐ) via a linking group (LG) can be obtained by adding batch-wise to the reaction mixture a mixture of the at least two different monomers (MM).

Transition metal catalysts reported to be useful in ATRP are those which can participate in a redox cycle with the initiator and the polymer chain.

Suitable transition metal catalysts for use in step b) of the process of the present invention include at least one transition metal of a group consisting of iron, copper, nickel, manganese and chromium and a ligand. Suitable transition metal catalysts can be in the form of a complex formed in a separate preliminary step by reaction of a salt of the transition metal and the ligand, or is preferably formed in-situ from the transition metal salt which is then converted to the complex compound by addition of the ligand present in the complex catalyst.

Suitable ligands for use in step b) of the process of the present invention are those able to form a complex with the transition metal. In particular, copper can be supplied to the system, for example, starting from one of the salts of a group consisting of Cu₂O, CuBr, CuCl, Cul, CuN₃, CuSCN, CuCN, CuNO₂, CuNOs, CuBF₄, Cu(CH₃COO) or Cu(CF₃COO), and the transition metal catalysts can be formed in situ by addition of a suitable ligand for copper, which can be selected from 2'-bipyridyl and derivatives thereof, 1,10-phenanthroline and derivatives thereof, tetramethylethylenediamine, pentamethyl diethylenetriamine, hexamethylene methyltris (2-aminoethyl) complexes.

Suitable ligands for iron can be suitably selected from bis triphenylphosphine complex, triazacyclononane complex, and the like.

The transition metal is converted from its lower oxidation state in the above-mentioned redox systems to its higher oxidation state during the ATRP reaction.

Reaction temperature in step b) of the process is usually in the range of from 0 to 100°C. The reaction time is usually from 1 to 20 hours.

In step c), purification the polymer (PFPE_{A}) obtained in step b) is carried out to remove the at least one transition metal compound from the reaction medium. Purification may suitably be carried out by any technique known in the art. As an example, removal of transition metal may be carried out by addition of an ion exchange resin or by precipitation by means of the addition of a suitable precipitant and are then removed by means of filtration.

Polymers (PFPE_{A}) obtained after the purification step c) of the process of the present invention are preferably polymers of formula (III) as above defined wherein Q is a halogen coming from the polymer (PFPE_{I}).

Polymers (PFPE_{A}) of formula (III) as above defined wherein Q is a halogen obtained at the end of step b) or at the end of step c) may optionally be submitted to an additional reduction step in order to reduce the halogen atom to a hydrogen atom, thus providing polymers (PFPE_{A}) of formula (III) as above defined wherein Q is a hydrogen atom.

Polymers (PFPE_{A}) of formula (III) as above defined wherein Q is a halogen may also be used as starting material for obtaining derivatives of polymers (PFPE_{A}) having any suitable chain-end functionality that can be obtained by reacting the terminal halogen atom with any suitable functionalizing reactant by transformations known in the art. The halogen atom of polymers (PFPE_{A}) of formula (III) as above defined wherein Q is a halogen can in fact be treated with suitable reactants to provide corresponding polymer (PFPE_{F}) of formula (V):

A'-O-R_{f}-(CF₂)ₓ-CFZ-CH₂-O-Rₐ-C(=O)-C(R₆R₇)-Y_{w}-Fᵤₙ (V)

wherein R_{f}, Rₐ, R₆, R₇, Y, x, and w are as above defined;
- A' is -Ra-C(=O)-C(R₆R₇)-Y_{w}-F, wherein Rₐ, R₆, R₇, Y and w are as defined above, or is a straight or branched C₁-C₄ (per)fluoroalkyl group wherein one fluorine atom can be substituted by one chlorine atom or one hydrogen atom; and
- Fun is a moiety containing at least one functionality such as hydroxyl, amino, carboxyl, C₁-C₁₀ unsaturated carbon chain, epoxy.

Polymers (PFPE_{A}) wherein the recurring units (MA) are recurring units deriving from (meth)acrylic monomers that comprise at least one functional group (FG) may also be used as starting material for obtaining other derivatives of polymers (PFPE_{A}) [polymers (PFPE_{FA})] having any suitable functionality grafted to the polymers (PFPE_{A}) backbone through said functional group (FG) of the unit (MA).

Polymers (PFPE_{FA}) may suitably be polymers of formula (VI) below:

A"-O-R_{f}-(CF₂)ₓ-CFZ-CH₂-O-Rₐ-C(=O)-C(R₆R₇)-Y²_{w}-Q (VI)

wherein R_{f}, Rₐ, R₆, R₇, x, w and Q are as above defined;
A" is -Rₐ-C(=O)-C(R₆R₇)- Y²_{w}-Q, wherein Rₐ, R₆, R₇ w and Q are as defined above, or is a straight or branched C₁-C₄ (per)fluoroalkyl group wherein one fluorine atom can be substituted by one chlorine atom or one hydrogen atom; and
Y² is a group of formula: 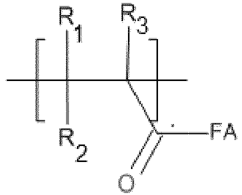
wherein R₁, R₂ and R₃, equal to or different from each other, are independently selected from a hydrogen atom and a C₁-C₃ hydrocarbon group; and FA is any suitable moiety containing at least one functionality such as hydroxyl, amino, carboxyl, C₁-C₁₀ unsaturated carbon chain or epoxy, that can be obtained by reaction of the functional group of a functionalized (meth)acrylic monomer (MA) with any suitable functionalizing reactant by transformations known in the art.

The Applicant surprisingly found that the process according to the present invention allows to modulate the structure of the perfluoropolyether polymers thanks to the possibility of introducing recurring units (MA) deriving from different (meth)acrylic monomers, functionalities FA grafted to the polymer backbone and/or functionalities Fᵤₙ at the chain ends, and hence it is possible to tune the physical and chemical properties thereof, notably the solubility in hydrogenated solvents, the resistance to hydrolysis the compatibility with several materials.

In still a further aspect, the present invention thus relates to the use of at least one polymer (PFPE_{A}) as defined above, as an intermediate compound in the synthesis of at least one polymer (PFPE_{F}) or of at least one polymer (PFPE_{FA}) as defined above.

Polymer (PFPE_{A}), polymer (PFPE_{F}) or polymer (PFPE_{FA}) according to the present invention can be used as such or as a composition [composition (S)], containing said polymers and at least one solvent.

Preferably, said composition (S) is in the form of a solution.

Suitable solvents for use in compositions (S) are selected from the group consisting of ketones, for instance methylethylketone (MEK), methylisobutylketone (MIBK ); esters, for instance ethyl acetate, butyl acetate, isobutyl acetate; organic solvents containing in the molecule an ester-ether group, such as polyoxyethylene monoethyl-ether acetate, polyoxyethylene monobutylether acetate, polyoxy butylene mono-ethylether acetate, polyoxy-butylene monobutylether acetate, polyoxyethylene diacetate, polyoxybutylene-diacetate, 2-ethoxy ethylacetate, ethyleneglycol diacetate, butyleneglycol diacetate; aromatic solvents, such as, toluene, xylene, ethylbenzene; halogenated hydrocarbons such as chloroform; sulphur-containing compounds such as dimethyl sulfoxide; and mixture thereof. Esters are particularly preferred. Good results have been obtained by using butyl acetate, ethyl acetate and mixtures thereof. Preferably, said composition (S) contains polymer (PFPE_{A}) or a derivative thereof in an amount of from 1 to 90 wt%, preferably from 10 to 75wt %, based on the total weight of said composition (S).

The main targeted uses of the polymers (PFPE_{A}) of the invention, of derivatives polymer (PFPE_{F}) or polymer (PFPE_{FA}), and of compositions (S), are for coating, surface treatment and as additive in polymer composites and coating compositions.

In particular, the polymers (PFPE_{A}) of the invention, of derivatives polymer (PFPE_{F}) or polymer (PFPE_{FA}), and of compositions (S) can be suitably used as additives in coating compositions comprising polyacrylic resins.

In another aspect of the present invention, polymers (PFPE_{A}), derivatives polymer (PFPE_{F}) or polymer (PFPE_{FA}) and compositions (S) of the present invention may be suitably used in the preparation of curable coating compositions further comprising a curing agent.

The presence of recurring units derived from (meth)acrylic monomers possibly bearing at least one functional group (FG) advantageously allows polymers (PFPE_{A}), derivatives polymer (PFPE_{F}) or polymer (PFPE_{FA}) and compositions (S) comprising the same to react with crosslinking agents to obtain cured coatings.

In particular, curable coating compositions comprising polymers (PFPE_{A}), derivatives polymer (PFPE_{F}) or polymer (PFPE_{FA}) or compositions (S) of the present invention comprising (meth)acrylic monomers bearing at least one hydroxyl functional group (FG) and at least one polyisocyanate can be prepared and cured to obtain improved coating compositions.

Should the disclosure of any patents, patent applications, and publications which are incorporated herein by reference conflict with the description of the present application to the extent that it may render a term unclear, the present description shall take precedence.

The invention will be herein after illustrated in greater detail by means of the examples contained in the following Experimental Section; the examples are merely illustrative and are by no means to be interpreted as limiting the scope of the invention.

### Experimental Section

### Materials and methods

Fluorolink^{®} E10 and Fluorolink^{®} D were obtained from Solvay Specialty Polymers Italy S.p.A..

Trimethylamine, 2-bromoisobutyryl bromide, methyl-methacrylate, hydroxyethyl-methacrylate, CuBr and tributyltinhydride where purchased from Sigma-Aldrich^{®} and used as such.

Novec^{™} HFE7100 was purchased from 3M.

Polyisocianate VESTANAT T1890/100, commercially available from Evonik.

Setalux 1198 SS-70, Setalux 1907 BA-75, Setalux 1184 SS-51, commercially available from Brenntag.

¹H-NMR and ¹⁹F-NMR were recorded on an Agilent System 500 operating at 499.86 MHz for ¹H and 470.30 MHz for ¹⁹F.

Static contact angles were measured using Drop Shape Analyzer "Krüss DSA10" from Krüss GmbH, Germany, by casting at least five drops of liquid mixture (10% w/w solutions of polymer in butyl acetate) on aluminum panels and drying at room temperature for 48h. Contact angles were measured if a clear homogeneous film is obtained. Water and *n-*hexadecane solvent were used as reference solvents for measuring hydrophobicity and oleophobicity.

### XRF (determination of Bromine):

1 g of polymer sample was solubilized in MIBK (methyl isobutyl ketone); the clear solution was analyzed with the XRF WD Panalalytical PW 2400 instrument in liquid sample configuration. The instrument was previously calibrated using a solid standard of Br (2-bromobenzoic acid) solubilized in MIBK to have the same matrix between sample and standards and eliminate interference.

The quantitative determination of Br in the sample is obtained by comparison with the calibration solutions. The method is applicable to the samples with Br content higher than 50 µg/g.

### ICP (Cu determination):

0.1 g of polymer sample was mineralized using a microwave acid digestion system with HNO₃ and HCl 3:1; after specific dilution, the clear digested solution was analyzed with the ICP-OES PerkinElmer Optima 4300 DV instrument previously calibrated using different solutions of Cu aqueous certificate standard.

The quantitative determination of Cu in the sample comes from the comparison with the calibration solutions. The method has an analytical limit of 25 µg Cu/g sample.

### Solubility in solvents:

1 gram of polymer was placed in a glass container with plastic screw cap and 10 cm³ of the desired solvent were added; the container was closed and placed in a mechanical shaker, at room temperature, for a minimum of 4 h. The mixtures were allowed to rest for 24h, at room temperature. If there is no solid dispersed or settled in the mixture, the mixture is labelled as "Soluble"

### Synthesis of polymer P-1

### Polymer P-1a (comparative)

Fluorolink^{®} D (30 g, E.W.=900, 33 meq), triethylamine (8.3 g, 82 mmol) were dissolved in 35 ml of Novec^{™} HFE7100, in a 250 ml flask, and the solution was cooled to 0°C. Then, 2-bromoisobutyryl bromide (15.45 g, 65 mmol) was added drop wise into the flask under N₂ flow. The reaction mixture was stirred for 1h at 0°C and then for 8h at room temperature. The crude product was first washed with HCl (5% aqueous solution, 12 ml), then washed several times with demineralized water to neutral pH, dried over anhydrous MgSO₄, filtered and concentrated under vacuum at 35°C for 8h, to give 33 gr of

(CF₂CF₂O)ₐ₁(CF₂O)ₐ₂-[CF₂CH₂O-C(=O)-C(CH₃)₂-Br]₂ (Polymer P-1a)

as a yellowish liquid, wherein a1/a2 = about 1.

### Polymer P-1b

Fluorolink^{®} E10 (31.6 g., E.W.=950, 33 meq), triethylamine (8.3 g, 82 mmol) were dissolved in 35 ml of Novec^{™} HFE7100, in a 250 ml flask, and the solution was cooled to 0°C. Then, 2-bromoisobutyryl bromide (15.45 g, 65 mmol) was added drop wise into the flask under N₂ flow. The reaction mixture was stirred for 1h at 0°C and then for 8h at room temperature. The crude product was first washed with HCl (5% aqueous solution, 12 ml), then washed several times with demineralized water to neutral pH, dried over anhydrous MgSO₄, filtered and concentrated under vacuum at 35°C for 8h, to give 34 gr of (CF₂CF₂O)ₐ₁(CF₂O)ₐ₂-[CF₂CH₂O-(CH₂CH₂O)ₙC(=O)-C(CH₃)₂-Br]₂ (Polymer P-1b) as a yellowish liquid, wherein a1/a2 = about 1 and n is 1.5 as average.

### Hydrolitic stability of polymers P-1

Polymer P-1a (10 g) in 100 ml of a pH=10 buffer solution (boric acid/potassium chloride/sodium hydroxide) was stirred at T=80°C for 15 days. After 15 days, the solution was put in a separatory funnel, the lower phase containing polymer a1 was separated and NMR analysis was performed, to measure hydrolysis extent. as the ratio (CF₂CF₂O)ₐ₁(CF₂O)ₐ₂ -[CF₂CH₂O⁻]₂ / (CF₂CF₂O)ₐ₁(CF₂O)ₐ₂-[CF₂CH₂O-C(=O)-C(CH₃)₂-Br]₂. After 15 days, the hydrolysis of polymer P-1a was greater than 10%.

Polymer P-1b (10 g) in 100 ml of a pH=10 buffer solution (boric acid/potassium chloride/sodium hydroxide) was stirred at T=80°C for 15 days. After 15 days, the solution was put in a separatory funnel, the lower phase containing polymer P-1b was separated and NMR analysis was performed, to measure hydrolysis extent. as the ratio

(CF₂CF₂O)ₐ₁(CF₂O)ₐ₂-[CF₂CH₂O-(CH₂CH₂O)ₙ]₂ / (CF₂CF₂O)ₐ₁(CF₂O)ₐ₂-[CF₂CH₂O-(CH₂CH₂O)ₙ-C(=O)-C(CH₃)₂-Br]₂.

After 15 days, the hydrolysis of Polymer P-1b was not detectable.

### Synthesis of polymer P-2

### Polymer P-2a

(CF₂CF₂O)ₐ₁(CF₂O)ₐ₂₋[CF₂CH₂O-(CH₂CH₂O)ₙ-C(=O)-C(CH₃)₂-Br]₂ (polymer P-1b, 13.0 g, 12 meq), bipyridyl (4.3 g, 28 mmol), methylmethacrylate (MMA, 20.5 g, 205 mmol) and hydroxyethyl-methacrylate (HEMA, 8.9 g, 68mmol) were dissolved in freshly distillate acetone (50 ml) in a 250-ml flask, which was filled with N₂. After 30 min of stirring at room temperature (RT), CuBr (3.9 g, 28mmol) was added and the mixture was placed in an oil bath at 60°C. The polymerization was allowed to proceed for 16 h. tributyltinhydride (6.98 g, 24 meq) was added and the mixture was allowed to proceed at 60°C for further 8h, until complete substitution of the terminals -C-Br with C-H. After cooling at RT, the reaction mixture was diluted with acetone and passed through a plug of acidic alumina or acid exchange resin to remove the copper catalyst. The filtrate was purified by precipitation from water/ethanol; the copolymer thus precipitated was collected by filtration, and the unreacted MMA and HEMA present as supernatant were removed.

The polymer thus obtained of formula (CF₂CF₂O)ₐ₁(CF₂O)ₐ₂-[CF₂CH₂O-(CH₂CH₂O)ₙ-(MMA)_{16.8}-(HEMA)_{5.2}-H]₂ wherein a1/a2 = about 1 and ~1 and n = 1.5 as average was dried under vacuum at 35°C to give a white powder.

### Polymer P-2b

(CF₂CF₂O)ₐ₁(CF₂O)ₐ₂₋[CF₂CH₂O-(CH₂CH₂O)ₙ-C(=O)-C(CH₃)₂-Br]₂ (Polymer P-1b, 13.0 g, 12 meq), bipyridyl (4.3 g, 28 mmol), methylmethacrylate (MMA, 20.5 g, 205 mmol) and benzyl-methacrylate (BzMA, 12.0 g, 68mmol) were dissolved in freshly distillate acetone (50 ml) in a 250-ml flask, which was filled with N₂. After 30 min of stirring at room temperature (RT), CuBr (3.9 g, 28mmol) was added and the mixture was placed in an oil bath at 60°C. The polymerization was allowed to proceed for 16 h; tributyltinhydride (6.98 g, 24 meq) was added and the mixture was allowed to proceed at 60°C for further 8h, until complete substitution of the terminals -C-Br with C-H. After cooling at RT, the reaction mixture was diluted with acetone and passed through a plug of acidic alumina or acid exchange resin to remove the copper catalyst. The filtrate was purified by precipitation from water/ethanol; the copolymer thus precipitated was collected by filtration, and the unreacted MMA and HEMA present as supernatant were removed.

The polymer thus obtained of formula (CF₂CF₂O)ₐ₁(CF₂O)ₐ₂-[CF₂CH₂O-(CH₂CH₂O)ₙ-(MMA)₁₇-(BzMA)_{5.1}-H]₂ wherein a1/a2 = about 1 and n = 1.5 as average was dried under vacuum at 35°C to give a white powder.

Determination of Cu content by ICP, determination of Br by XRF and solubility in different solvents on samples of polymers P-2a and P-2b were carried out as reported above. The data are summarized in Table 1.

**Table 1**

| | **Polymer P-2a** | **Polymer P-2b** |
|---|---|---|
| ***NMR*** | | |
| PFPE | 1 | 1 |
| MMA | 16.8 | 17.0 |
| HEMA | 5.2 | |
| BzMA | | 5.1 |
| MW* | 6650 | 8105 |

| ***ICP*** | | |
|---|---|---|
| Cu (mg/g) | <0.025 | <0.025 |

| ***XRF*** | | |
|---|---|---|
| Br (mg/g) | 1.056 | 0.756 |

| ***Solubility*** | | |
|---|---|---|
| Xilene | Insoluble | Soluble |
| Butyl acetate | Soluble | Soluble |
| Acetonitrile | Insoluble | Soluble |
| 2-ethoxyethylacetate | Soluble | Soluble |
| Methyl isobutyl ketone | Soluble | Soluble |

| | | |
|---|---|---|
| * average molecular weight | | |

### Contact angle

10% solutions in butyl acetate of each polymer P-2a and P-2b were prepared and each solution was applied by casting on aluminium panels and dried at room temperature for 48h.

Contact angles using water as solvent were measured as described above. The results are shown in Table 2.

**Table 2**

| | **Polymer P-2a** | **Polymer P-2b** |
|---|---|---|
| **Contact Angle** | | |
| **Water** | 107.8 | 108.3 |

### Compatibility Tests

The following polymers were prepared substantially as described above:
Polymer P-2c: (CF₂CF₂O)ₐ₁(CF₂O)ₐ₂-[CF₂CH₂O-(CH₂CH₂O)ₙ-(MMA)₂₀-(BMA)_{4.5}-(HEMA)_{1.5}-H]₂ wherein a1/a2 = about 1 and n = 1.5 as average;
Polymer P-2d: (CF₂CF₂O)ₐ₁(CF₂O)ₐ₂-[CF₂CH₂O-(CH₂CH₂O)ₙ-(MMA)₂₀-(BzMA)_{4.5}-(HEMA)_{1.5}-H]₂ wherein a1/a2 = about 1 and n = 1.5 as average;
Polymer P-2e: (CF₂CF₂O)ₐ₁(CF₂O)ₐ₂-[CF₂CH₂O-(CH₂CH₂O)ₙ-(MMA)₁₅-(BMA)_{7.5}-(HEMA)₃-H]₂ wherein a1/a2 = about 1 and n = 1.5 as average;
Polymer P-2f: (CF₂CF₂O)ₐ₁(CF₂O)ₐ₂-[CF₂CH₂O-(CH₂CH₂O)ₙ-(MMA)₁₅-(BMA)₆-(HEMA)₃-H]₂ wherein a1/a2 = about 1 and n = 1.5 as average.

10% solutions in butyl acetate of each polymer were prepared and each solution was mixed with 3 commercial polyacrylic resins (1 part of commercial polyacrylic resin and 1 part of the 10% solution of polymer):
- Setalux 1198 SS-70 70% in butyl acetate
- Setalux 1907 BA-75 75% in butyl acetate
- Setalux 1184 SS-51 52% in butyl acetate

The mixtures were applied by casting on aluminium panels and dried at room temperature for 48h.

Contact angles using water and n-hexadecane as solvents were measured. The results are shown in Table 3.

**Table 3**

| | **Setalux 1907 BA-75** | **Setalux 1198-SS-70** | **Setalux 1184 SS-51** |
|---|---|---|---|
| **Polymer P-2c** | Clear homogeneous solution | Clear homogeneous solution | Clear homogeneous solution |
| **Contact Angle water** | 106.21 | 102.43 | 106.83 |
| **Contact Angle n-hexadecane** | 66.46 | 66.46 | 67.17 |
| | | | |
| **Polymer P-2d** | Clear homogeneous solution | Clear homogeneous solution | Clear homogeneous solution |
| **Contact Angle water** | 106.17 | 105.13 | 107.5 |
| **Contact Angle n-hexadecane** | 67.41 | 66.19 | 67.41 |

The results show that the polymers according to the invention have a good compatibility with polyacrylic resins.

### Compatibility Tests of cured compositions

Curable compositions were prepared mixing 10% solutions in butyl acetate of each polymer P-2c, P-2d, P-2e and P-2f and each solution was mixed with 3 commercial polyacrylics resins (1 part of commercial polyacrylic resin and 1 part of the 10% solution of polymer) and with polyisocianate, in ratio 1/1 between OH equivalents (deriving from the hydroxyl groups of HEMA units) and NCO equivalents of polyisocyanate.

Comparative blank compositions each comprising one of the 3 commercial polyacrylics resins and polyisocianate were prepared.

The mixtures were applied by casting on aluminium panels, dried at room temperature for 24 and cured at 80°C for 4h.

Contact angles using water and n-hexadecane as solvents were measured. The results are shown in Table 4.

**Table 4**

| | **Setalux 1907 BA-75** | **Setalux 1198-SS-70** | **Setalux 1184 SS-51** |
|---|---|---|---|
| **Comparative blank** | | | |
| **Contact Angle water** | 87.5 | 88.8 | 86.2 |
| **Contact Angle n-hexadecane** | 32.8 | 31.6 | 30.0 |
| | | | |
| **Cured polymer P-2c** | Clear homogeneous solution | Clear homogeneous solution | Clear homogeneous solution |
| **Contact Angle water** | 92.4 | 86.4 | 106.8 |
| **Contact Angle n-hexadecane** | 58.4 | 64.1 | 65.1 |
| | | | |
| **Cured polymer P-2d** | Clear homogeneous solution | Clear homogeneous solution | Clear homogeneous solution |
| **Contact Angle water** | 105.8 | 106.5 | 107.2 |
| **Contact Angle n-hexadecane** | 64.0 | 64.9 | 66.2 |
| | | | |
| **Cured polymer P-2e** | Clear homogeneous solution | Clear homogeneous solution | Clear homogeneous solution |
| **Contact Angle water** | 103.7 | 107.1 | 106.2 |
| **Contact Angle n-hexadecane** | 62.5 | 64.4 | 65.0 |
| | | | |
| **Cured polymer P-2f** | Clear homogeneous solution | Clear homogeneous solution | Clear homogeneous solution |
| **Contact Angle water** | 104.9 | 104.5 | 107.3 |
| **Contact Angle n-hexadecane** | 62.7 | 63.9 | 65.3 |

## Claims

1. A (per)fluoropolyether polymer [polymer (PFPE_{A} comprising:
- at least one (per)fluoropolyoxyalkylene chain [chain (R_{f})] having two chain ends;
- at least one (poly)oxyalkylene chain [chain (Rₐ)] bonded to at least one chain end of said chain (R_{f}), said chain (Rₐ) comprising at least one fluorine-free oxyalkylene unit; and
- at last one (meth)acrylic monomer recurring unit [unit (MA)] of formula (I): 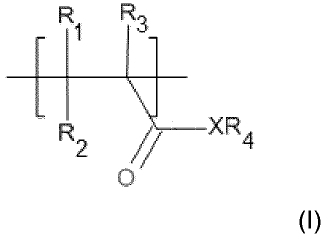 wherein:
- R₁, R₂ and R₃, equal to or different from each other, are independently selected from a hydrogen atom and a C₁-C₃ hydrocarbon group;
- X is an oxygen atom, a sulphur atom or, a group NR₈ wherein R₈ is selected from a hydrogen atom and a C₁-C₃ hydrocarbon group;
- R₄ is a hydrogen atom or a C₂-C₂₀ hydrocarbon chain moiety, wherein said C₂-C₂₀ hydrocarbon chain moiety optionally comprises at least one functional group (FG);
wherein said at least one unit (MA) is bonded to said at least one chain (Rₐ) via a linking group (LG) of formula
*-(C=O)-R₅-**
wherein R₅ is a C₁-C₈ alkylene or cycloalkylene group having at least one secondary or tertiary carbon atom,
symbol (*) indicates the bond to said chain (Rₐ), and
symbol (**) indicates the bond to said units (MA) through said secondary or tertiary carbon atom.

2. The polymer (PFPE_{A} according to claim 1 wherein chain (R_{f} is a (per)fluoropolyoxyalkylene chain having an average number molecular weight Mₙ ranging from 100 to 8,000, preferably from 300 to 6,000, more preferably from 800 to 3,000, and comprising, preferably consisting of, repeating units, which may be equal to or different from one another, selected from:
(i) -CFY'O-, wherein Y' is F or CF₃,
(ii) -CFY'CFY'O-, wherein Y', equal or different at each occurrence, is as above defined, with the proviso that at least one of Y' is -F,
(iii) -CF₂CF₂CW₂O-, wherein each of W, equal or different from each other, are F or H,
(iv) -CF₂CF₂CF₂CF₂O-,
(v) -(CF₂)ⱼ-CFZ'-O- wherein j is an integer from 0 to 3 and Z' is a group of general formula -OR_{f}'T, wherein R_{f}' is a fluoropolyoxyalkene chain comprising a number of repeating units from 0 to 10, said recurring units being chosen among the followings : -CFY"O- , -CF₂CFY"O-, -CF₂CF₂CF₂O-, - CF₂CF₂CF₂CF₂O-, with each of each of Y" being independently F or CF₃ and T being a C₁-C₃ perfluoroalkyl group.

3. The polymer (PFPE_{A} according to claim 2 wherein chain (R_{f} is selected from formulae (R_{f}-I), (R_{f}-IIA), (R_{f}-IIB), (R_{f}-IIC), (R_{f}-IID), (R_{f}-IIE) or (R_{f}-III) below:
(R_{f}-I) -[(CFX¹O)_{g1}(CFX²CFX³O)_{g2}(CF₂CF₂CF₂O)_{g3}(CF₂CF₂CF₂CF₂O)_{g4}]-
wherein
- X¹ is independently selected from -F and -CF₃,
- X², X³, equal or different from each other and at each occurrence, are independently -F, -CF₃, with the proviso that at least one of X¹ to X³ is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain;
(R_{f}-IIA) -[(CF₂CF₂O)ₐ₁(CF₂O)ₐ₂]-
wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;
(R_{f}-IIB) -[(CF₂CF₂O)_{b1}(CF₂O)_{b2}(CF(CF₃)O)_{b3}(CF₂CF(CF₃)O)_{b4}]-
wherein:
b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;
(R_{f}-IIC) -[(CF₂CF₂O)_{c1}(CF₂O)_{c2}(CF₂(CF₂)_{cw}CF₂O)_{c3}]-
wherein:
cw = 1 or 2;
c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being lower than 0.2;
(R_{f}-IID) -[(CF₂CF(CF₃)O)_{d}]-
wherein:
d is an integer > 0 such that the number average molecular weight is between 400 and 10,000, preferably between 400 and 5,000;
(R_{f}-IIE) -[(CF₂CF₂C(Hal*)₂O)ₑ₁-(CF₂CF₂CH₂O)ₑ₂-(CF₂CF₂CH(Hal*)O)ₑ₃]-
wherein:
- Hal*, equal or different at each occurrence, is a halogen selected from fluorine and chlorine atoms, preferably a fluorine atom;
- e1, e2, and e3, equal to or different from each other, are independently integers ≥ 0 such that the (e1+e2+e3) sum is comprised between 2 and 300;
(R_{f}-III) -[(CF₂CF₂O)ₐ₁(CF₂O)ₐ₂]-
wherein:
- a1, and a2 are integers > 0 such that the number average molecular weight is between 400 and 10,000, preferably between 400 and 5,000, with the ratio a1/a2 being comprised between 0.1 and 10, more preferably between 0.2 and 5.

4. The polymer (PFPE_{A} according to claim 1 wherein chain (Rₐ is a polyoxyalkylene chain free from fluorine atoms, said chain comprising from 1 to 50 fluorine-free oxyalkylene units, said units being the same or different from one another and having the general formula: 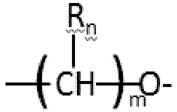 wherein Rₙ is at each occurrence independently a hydrogen, a lower alkyl or a lower alkoxy group, and m is an integer from 1 to 10.

5. The polymer (PFPE_{A} according to claim 4 wherein the fluorine-free oxyalkylene units are selected from -CH₂CH₂O- and -CH₂CH(J)O-, wherein J is a straight or branched alkyl or aryl, preferably methyl, ethyl or phenyl.

6. The polymer (PFPE_{A} according to anyone of claims 4 or 5 wherein chain Rₐ complies with formula (Rₐ-I) below:
(Rₐ-I) -(CH₂CH₂O)ᵣ(CH₂CH(CH₃)O)ₛ(CH₂CH(CH₂CH₃)O)ₜ(CH₂CH(Ph)O)ᵤ-
wherein r, s, t and u are independently selected from 0 and a positive number, with r+s+t+u ranging from 1 to 50, preferably from 1 to 15, more preferably from 1 to 10.

7. The polymer (PFPE_{A} according to claim 1 wherein the at least one functional group (FG) is selected from the group consisting of hydroxyl groups, ether groups, oxyalkylene groups, polyoxyalkylene groups, carboxylic acid groups, amine groups, amide groups, halogen containing groups, including fluoro and perfluoro groups, halogen atoms, phosphate groups, ester groups, siloxane groups and polysiloxane groups.

8. The polymer (PFPE_{A} according to claim 1 wherein the linking group (LG) is selected from formulae (LG-I) or (LG-II):
(LG-I) *-(C=O)-C(R₆R₇)-**
wherein R₆ and R₇ are independently a hydrogen, a methyl or a benzyl group, with the proviso that R₆ and R₇ cannot be both hydrogen,
(LG-II) *-(C=O)-C(CH₃)₂-**.

9. A process for manufacturing polymers (PFPE_{A} according to anyone of claims 1 to 8, the process comprising the following steps:
a) providing a PFPE macroinitiator [polymer (PFPE_{I})] comprising:
- at least one (per)fluoropolyoxyalkylene chain [chain (R_{f})];
- at least one (poly)oxyalkylene chain [chain (Rₐ)] bonded to at least one side of said chain (R_{f}), said chain (Rₐ) comprising at least one fluorine-free oxyalkylene unit; and
- at least one group of formula *-(C=O)-R₅-X', wherein R₅ is a C₁-C₈ alkylene or cycloalkylene group including at least one secondary or tertiary carbon atom, X' is a halogen, wherein the halogen is bonded to R₅ via said secondary or tertiary carbon atom, symbol (*) indicates the bond to said chain (Rₐ);
b) reacting the initiator provided in step a) by atom transfer radical polymerisation (ATRP) with at least one (meth)acrylic monomer [monomer (MM)] of formula (II): 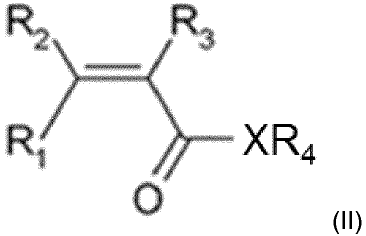 wherein
- R₁, R₂ and R₃, equal to or different from each other, are independently selected from a hydrogen atom and a C₁-C₃ hydrocarbon group;
- X is an oxygen atom, a sulphur atom or, a group NR₈ wherein R₈ is selected from a hydrogen atom and a C₁-C₃ hydrocarbon group;
- R₄ is a hydrogen atom or a C₂-C₂₀ hydrocarbon chain moiety, wherein said C₂-C₂₀ hydrocarbon chain moiety optionally comprises at least one functional group (FG);
in the presence of at least one transition metal catalyst and of a ligand to obtain a polymer (PFPE_{A}); and
c) purifying the polymer (PFPE_{A}) obtained in step b) to remove the at least one transition metal catalyst.

10. The process of claim 9 wherein the at least one group of formula *-(C=O)-Rs-X' complies with formula
*-(C=O)-C(R₆R₇)-X'
wherein R₆ and R₇ are independently a hydrogen, a methyl or a benzyl group, with the proviso that R₆ and R₇ cannot be both hydrogen, and X' is a chlorine, a bromine or a iodine atom.

11. A polymer (PFPEi) comprising:
- at least one (per)fluoropolyoxyalkylene chain [chain (R_{f})];
- at least one (poly)oxyalkylene chain [chain (Rₐ)] bonded to at least one side of said chain (R_{f}), said chain (Rₐ) comprising at least one fluorine-free oxyalkylene unit; and
- at least one group of formula *-(C=O)-R₅-X', wherein R₅ is a C₁-C₈ alkylene or cycloalkylene group including at least one secondary or tertiary carbon atom, X' is a halogen, wherein the halogen is bonded to R₅ via said secondary or tertiary carbon atom, symbol (*) indicates the bond to said chain (Rₐ).

12. The polymer (PFPE_{I} of claim 11 of formula (IV):
A-O-R_{f}-(CF₂)ₓ-CFZ-CH₂-O-Rₐ-C(=O)-C(R₆R₇)-X' (IV)
wherein:
- R_{f} is a (per)fluoropolyoxyalkylene chain having an average number molecular weight Mₙ ranging from 100 to 8,000, preferably from 300 to 6,000, more preferably from 800 to 3,000, and comprising, preferably consisting of, repeating units, which may be equal to or different from one another, selected from:
(i) -CFY'O-, wherein Y' is F or CF₃,
(ii) -CFY'CFY'O-, wherein Y', equal or different at each occurrence, is as above defined, with the proviso that at least one of Y' is -F,
(iii) -CF₂CF₂CW₂O-, wherein each of W, equal or different from each other, are F or H,
(iv) -CF₂CF₂CF₂CF₂O-,
(v) -(CF₂)ⱼ-CFZ'-O- wherein j is an integer from 0 to 3 and Z' is a group of general formula -OR_{f}'T, wherein R_{f}' is a fluoropolyoxyalkene chain comprising a number of repeating units from 0 to 10, said recurring units being chosen among the followings : -CFY"O- , -CF₂CFY"O-, - CF₂CF₂CF₂O-, -CF₂CF₂CF₂CF₂O-, with each of each of Y" being independently F or CF₃ and T being a C₁-C₃ perfluoroalkyl group;
- Z is fluorine or CF₃;
- x is 0 or 1, with the proviso that, when, x is 1, Z is F;
- Rₐ is a polyoxyalkylene chain free from fluorine atoms, said chain comprising from 4 to 50 fluorine-free oxyalkylene units, said units being the same or different from one another and being selected from - CH₂CH₂O- and -CH₂CH(J)O-, wherein J is a straight or branched alkyl or aryl, preferably methyl, ethyl or phenyl
- R₆ and R₇ are independently a hydrogen, a methyl or a benzyl group, with the proviso that R₆ and R₇ cannot be both hydrogen;
- X' is a chlorine, a bromine or a iodine atom, preferably a bromine atom;
- A is -Rₐ-C(=O)-C(R₆R₇)-X', wherein Rₐ, R₆, R₇, and X' are as defined above, or is a straight or branched C₁-C₄ (per)fluoroalkyl group wherein one fluorine atom can be substituted by one chlorine atom or one hydrogen atom.

13. A polymer (PFPE_{I} according to claim 12 having formula
R_{f}[CF₂CH₂O-(CH₂CH₂O)ₙ-C(=O)-C(CH₃)₂-Br]₂.

14. A composition (S) comprising a polymer as defined in any one of claims 1 to 8, and at least one solvent.

15. A method for coating at least one surface of a substrate, preferably selected from plastic, metallic or glass, said method comprising:
(i) contacting a substrate with said composition (S) and
(ii) drying said composition (S) onto said substrate.

## Patentansprüche

1. (Per)fluorpolyetherpolymer [Polymer (PFPE_{A})] umfassend:
- wenigstens eine (Per)fluorpolyoxyalkylenkette [Kette (R_{f})] mit zwei Kettenenden;
- wenigstens eine (Poly)oxyalkylenkette [Kette (Rₐ)], die an wenigstens ein Kettenende der Kette (R_{f}) gebunden ist, wobei die Kette (Rₐ) wenigstens eine fluorfreie Oxyalkyleneinheit umfasst; und
- wenigstens eine (Meth)acrylmonomer-Wiederholungseinheit [Einheit (MA)] der Formel (I): 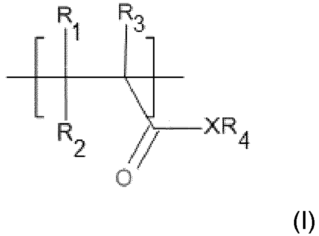 wobei:
- R₁, R₂ und R₃, gleich oder voneinander verschieden, unabhängig ausgewählt sind aus einem Wasserstoffatom und einer C₁-C₃-Kohlenwasserstoffgruppe;
- X ein Sauerstoffatom, ein Schwefelatom oder eine Gruppe NRₐ ist, wobei R₈ ausgewählt ist aus einem Wasserstoffatom und einer C₁-C₃-Kohlenwasserstoffgruppe;
- R₄ ein Wasserstoffatom oder eine C₂-C₂₀-Kohlenwasserstoffketteneinheit ist, wobei die C₂-C₂₀-Kohlenwasserstoffketteneinheit gegebenenfalls wenigstens eine funktionelle Gruppe (FG) umfasst;
wobei wenigstens eine Einheit (MA) über eine Verknüpfungsgruppe (LG) der Formel
*-(C=O)-R₅-**
an die wenigstens eine Kette (Rₐ) gebunden ist, wobei R₅ eine C₁-C₈-Alkylen- oder -Cycloalkylengruppe mit wenigstens einem sekundären oder tertiären Kohlenstoffatom ist,
das Symbol (*) die Bindung zu der Kette (Rₐ) bezeichnet und
das Symbol (**) die Bindung zu den Einheiten (MA) durch das sekundäre oder tertiäre Kohlenstoffatom bezeichnet.

2. Polymer (PFPE_{A}) gemäß Anspruch 1, wobei die Kette (R_{f}) eine (Per) fluorpolyoxyalkylenkette mit einem anzahlgemittelten Molekulargewicht Mₙ in dem Bereich von 100 bis 8.000, vorzugsweise von 300 bis 6.000, bevorzugter von 800 bis 3.000, ist und Wiederholungseinheiten umfasst, vorzugsweise daraus besteht, die gleich oder voneinander verschieden sein können, ausgewählt aus:
(i) -CFY'O-, wobei Y' F oder CF₃ ist,
(ii) -CFY'CFY'O-, wobei Y', bei jedem Auftreten gleich oder verschieden, wie vorstehend definiert ist, mit der Maßgabe, dass wenigstens ein Y' -F ist,
(ii) -CF₂CF₂CW₂O-, wobei jedes W, gleich oder voneinander verschieden, F oder H ist,
(iv) -CF₂CF₂CF₂CF₂O-,
(v) -(CF₂)ⱼ-CFZ'-O-, wobei j eine ganze Zahl von 0 bis 3 ist und Z' eine Gruppe der allgemeinen Formel -OR_{f}'T ist, wobei R_{f}' eine Fluorpolyoxyalkenkette ist, die eine Anzahl von Wiederholungseinheiten von 0 bis 10 umfasst, wobei die Wiederholungseinheiten aus den folgenden ausgewählt sind: -CFY'O-, -CF₂CFY"O-, -CF₂CF₂CF₂O-, - CF₂CF₂CF₂CF₂O-, wobei jedes Y" unabhängig F oder CF₃ ist und T eine C₁-C₃-Perfluoralkylgruppe ist.

3. Polymer (PFPE_{A}) gemäß Anspruch 2, wobei die Kette (R_{f}) ausgewählt ist aus den nachstehenden Formeln (R_{f}-I), (R_{f}-IIA), (R_{f}-IIB), (R_{f}-IIC), (R_{f}-IID), (R_{f}-IIE) und (R_{f}-III),
(R_{f}-I) - [(CFX¹O)_{g1}(CFX²CFX³O)_{g2}(CF₂CF₂CF₂O)_{g3}(CF₂CF₂CF₂CF₂O)_{g4}]-
wobei:
- X¹ unabhängig ausgewählt ist aus -F und -CF₃,
- X₂, X₃, gleich oder voneinander verschieden und bei jedem Auftreten unabhängig -F, -CF₃ sind, mit der Maßgabe, dass wenigstens eines von X¹ bis X³ -F ist;
- g1, g2, g3 und g4, gleich oder voneinander verschieden, unabhängig ganze Zahlen ≥ 0 sind, so dass g1+g2+g3+g4 in dem Bereich von 2 bis 300 liegt, vorzugsweise von 2 bis 100; sollten wenigstens zwei von g1, g2, g3 und g4 von null verschieden sein, sind die verschiedenen Wiederholungseinheiten allgemein statistisch entlang der Kette verteilt;
(R_{f}-IIA) -[(CF₂CF₂O)ₐ₁(CF₂O)ₐ₂]-
wobei:
- a1 und a2 unabhängig ganze Zahlen ≥ 0 sind, so dass das anzahlgemittelte Molekulargewicht zwischen 400 und 10.000, vorzugsweise zwischen 400 und 5.000, liegt; vorzugsweise sind a1 und a2 beide von null verschieden, wobei das Verhältnis a1/a2 vorzugsweise zwischen 0,1 und 10 liegt;
(R_{f}-IIB) -[(CF₂CF₂O)_{b1}(CF₂O)_{b2}(CF(CF₃)O)_{b3}(CF₂CF(CF₃)O)_{b4}]-
wobei:
b1, b2, b3, b4 unabhängig ganze Zahlen ≥ 0 sind, so dass das anzahlgemittelte Molekulargewicht zwischen 400 und 10.000, vorzugsweise zwischen 400 und 5.000, liegt;
vorzugsweise ist b1 0, sind b2, b3, b4 > 0, wobei das Verhältnis b4/(b2+b3) ≥ 1 ist;
(R_{f}-IIC) -[(CF₂CF₂O)_{c1}(CF₂O)_{c2}(CF₂(CF₂)_{cw}CF₂O)_{c3}]-
wobei:
cw = 1 oder 2;
c1, c2 und c3 unabhängig ganze Zahlen ≥ 0 sind, so ausgewählt, dass das anzahlgemittelte Molekulargewicht 5.000, liegt; vorzugsweise sind c1, c2 und c3 alle > 0, wobei das Verhältnis c3/(c1+c2) kleiner als 0,2 ist;
(R_{f}-IID) -[(CF₂CF(CF₃)O)_{d}]-
wobei:
d eine ganze Zahl > 0 ist, so dass das anzahlgemittelte Molekulargewicht zwischen 400 und 10.000, vorzugsweise zwischen 400 und 5.000, liegt;
(R_{f}-IIE) - [(CF₂CF₂C(Hal*)₂O)ₑ₁-(CF₂CF₂CH₂O)ₑ₂-(CF₂CF₂CH(Hal*)O)ₑ₃]-
wobei:
- Hal*, bei jedem Auftreten gleich oder verschieden, ein Halogen ausgewählt aus Fluor- und Chloratomen ist, vorzugsweise ein Fluoratom;
- e1, e2 und e3, gleich oder voneinander verschieden, unabhängig ganze Zahlen ≥ 0 sind, so dass die Summe (e1+e2+e3) in dem Bereich zwischen 2 und 300 liegt;
(R_{f}-III) -[(CF₂CF₂O)ₐ₁(CF₂O)ₐ₂]-
wobei:
- a1 und a2 ganze Zahlen > 0 sind, so dass das anzahlgemittelte Molekulargewicht zwischen 400 und 10.000, vorzugsweise zwischen 400 und 5.000, liegt, wobei das Verhältnis a1/a2 in dem Bereich zwischen 0,1 und 10, bevorzugter zwischen 0,2 und 5, liegt.

4. Polymer (PFPE_{A}) gemäß Anspruch 1, wobei die Kette (Rₐ) eine von Fluoratomen freie Polyoxyalkylenkette ist, wobei die Kette von 1 bis 50 fluorfreie Oxyalkyleneinheiten umfasst, wobei die Einheiten gleich oder voneinander verschieden sind und die allgemeine Formel aufweisen: 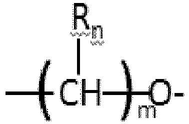 wobei Rₙ bei jedem Auftreten unabhängig ein Wasserstoff, eine Niederalkyl- oder eine Niederalkoxygruppe ist und m eine ganze Zahl von 1 bis 10 ist.

5. Polymer (PFPE_{A}) gemäß Anspruch 4, wobei die fluorfreien Oxyalkyleneinheiten ausgewählt sind aus -CH₂CH₂O- und -CH₂CH(J)O-, wobei J ein lineares oder verzweigtes Alkyl oder Aryl ist, vorzugsweise Methyl, Ethyl oder Phenyl.

6. Polymer (PFPE_{A}) gemäß einem der Ansprüche 4 oder 5, wobei die Kette Rₐ der nachstehenden Formel (Rₐ-I) entspricht:
(Rₐ-I) - (CH₂CH₂O)ᵣ(CH₂CH(CH₃)O)ₛ(CH₂CH(CH₂CH₃)O)ₜ(CH₂CH(Ph)O)ᵤ-
wobei r, s, t und u unabhängig ausgewählt sind aus 0 und einer positiven Zahl, wobei r+s+t+u in dem Bereich von 1 bis 50 liegt, vorzugsweise von 12 bis 15, bevorzugter von 1 bis 10.

7. Polymer (PFPE_{A}) gemäß Anspruch 1, wobei die wenigstens eine funktionelle Gruppe (FG) ausgewählt ist aus der Gruppe bestehend aus Hydroxygruppen, Ethergruppen, Oxyalkylengruppen, Polyoxyalkylengruppen, Carbonsäuregruppen, Amingruppen, Amidgruppen, halogenhaltigen Gruppen, einschließlich Fluor- und Perfluorgruppen, Halogenatomen, Phosphatgruppen, Estergruppen, Siloxangruppen und Polysiloxangruppen.

8. Polymer (PFPE_{A}) gemäß Anspruch 1, wobei die Verknüpfungsgruppe (LG) ausgewählt ist aus den Formeln (LG-I) und (LG-II):
(LG-I) *- (C=O)-C(R₆R₇)-**
wobei R₆ und R₇ unabhängig ein Wasserstoff, eine Methyloder eine Benzylgruppe sind, mit der Maßgabe, dass R₆ und R₇ nicht beide Wasserstoff sein können,
(LG-II) *-(C=O)-C(CH₃)₂-**.

9. Verfahren zur Herstellung von Polymeren (PFPE_{A}) gemäß einem der Ansprüche 1 bis 8, wobei das Verfahren die folgenden Schritte umfasst:
a) Bereitstellen eines PFPE-Makroinitiators [Polymer PFPE_{I})] umfassend:
- wenigstens eine (Per)fluorpolyoxyalkylenkette [Kette (R_{f})] ;
- wenigstens eine (Poly)oxyalkylenkette [Kette (Rₐ) J, die an wenigstens ein Seite der Kette (R_{f}) gebunden ist, wobei die Kette (Rₐ) wenigstens eine fluorfreie Oxyalkyleneinheit umfasst; und
- wenigstens eine Gruppe der Formel *-(C=O)-R₅-X', wobei R₅ eine C₁-C₈-Alkylen- oder -Cycloalkylengruppe mit wenigstens einem sekundären oder tertiären Kohlenstoffatom ist, X' ein Halogen ist, wobei das Halogen über das sekundäre oder tertiäre Kohlenstoffatom an R₅ gebunden ist, das Symbol (*) die Bindung zu der Kette (Rₐ) bezeichnet;
b) Umsetzen des bei Schritt a) bereitgestellten Initiators durch radikalische Atomtransferpolymerisation (ATRP) mit wenigstens einem (Meth)acrylmonomer [Monomer (MM)] der Formel (II): 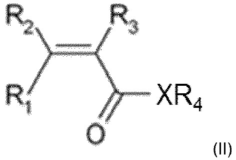 wobei:
- R₁, R₂ und R₃, gleich oder voneinander verschieden, unabhängig ausgewählt sind aus einem Wasserstoffatom und einer C₁-C₃-Kohlenwasserstoffgruppe;
- X ein Sauerstoffatom, ein Schwefelatom oder eine Gruppe NR₈ ist, wobei R₈ ausgewählt ist aus einem Wasserstoffatom und einer C₁-C₃-Kohlenwasserstoffgruppe;
- R₄ ein Wasserstoffatom oder eine C₂-C₂₀-Kohlenwasserstoffketteneinheit ist, wobei die C₂-C₂₀-Kohlenwasserstoffketteneinheit gegebenenfalls wenigstens eine funktionelle Gruppe (FG) umfasst;
in Gegenwart wenigstens eines Übergangsmetallkatalysators und eines Liganden, um ein Polymer (PFPE_{A}) zu erhalten; und
c) Reinigen des bei Schritt b) erhaltenen Polymers (PFPE_{A}), um den wenigstens einen Übergangsmetallkatalysator zu entfernen.

10. Verfahren gemäß Anspruch 9, wobei die wenigstens eine Gruppe der Formel *-(C=O)-R₅-X' der Formel
*-(C=O)-C(R₆R₇)-X'
entspricht, wobei R₆ und R₇ unabhängig ein Wasserstoff, eine Methyl- oder eine Benzylgruppe sind, mit der Maßgabe, dass R₆ und R₇ nicht beide Wasserstoff sein können, und X' ein Chlor-, ein Brom- oder ein Iodatom ist.

11. Polymer (PFPE_{I}) umfassend:
- wenigstens eine (Per)fluorpolyoxyalkylenkette [Kette (R_{f})] ;
- wenigstens eine (Poly)oxyalkylenkette [Kette (Rₐ) J, die an wenigstens ein Seite der Kette (R_{f}) gebunden ist, wobei die Kette (Rₐ) wenigstens eine fluorfreie Oxyalkyleneinheit umfasst; und
- wenigstens eine Gruppe der Formel *-(C=O)-R₅-X', wobei R₅ eine C₁-C₈-Alkylen- oder -Cycloalkylengruppe mit wenigstens einem sekundären oder tertiären Kohlenstoffatom ist, X' ein Halogen ist, wobei das Halogen über das sekundäre oder tertiäre Kohlenstoffatom an R₅ gebunden ist, das Symbol (*) die Bindung zu der Kette (Rₐ) bezeichnet.

12. Polymer (PFPE_{I}) gemäß Anspruch 11 der Formel (IV):
A-O-R_{f}(CF₂)ₓ-CFZ-CH₂-O-Rₐ-C(=O)-C(R₆R₇)-X' (IV)
wobei:
- (R_{f}) eine (Per)fluorpolyoxyalkylenkette mit einem anzahlgemittelten Molekulargewicht Mₙ in dem Bereich von 100 bis 8.000, vorzugsweise von 300 bis 6.000, bevorzugter von 800 bis 3.000, ist und Wiederholungseinheiten umfasst, vorzugsweise daraus besteht, die gleich oder voneinander verschieden sein können, ausgewählt aus:
(i) -CFY'O-, wobei Y' F oder CF₃ ist,
(ii) -CFY'CFY'O-, wobei Y', bei jedem Auftreten gleich oder verschieden, wie vorstehend definiert ist, mit der Maßgabe, dass wenigstens ein Y' -F ist,
(ii) -CF₂CF₂CW₂O-, wobei jedes W, gleich oder voneinander verschieden, F oder H ist,
(iv) -CF₂CF₂CF₂CF₂O-,
(v) -(CF₂)ⱼ-CFZ'-O-, wobei j eine ganze Zahl von 0 bis 3 ist und Z' eine Gruppe der allgemeinen Formel -OR_{f}'T ist, wobei R_{f}' eine Fluorpolyoxyalkenkette ist, die eine Anzahl von Wiederholungseinheiten von 0 bis 10 umfasst, wobei die Wiederholungseinheiten aus den folgenden ausgewählt sind: -CFY'O-, -CF₂CFY"O-, -CF₂CF₂CF₂O-, - CF₂CF₂CF₂CF₂O-, wobei jedes Y" unabhängig F oder CF₃ ist und T eine C₁-C₃-Perfluoralkylgruppe ist;
- Z Fluor oder CF₃ ist;
- x 0 oder 1 ist, mit der Maßgabe, dass, wenn x 1 ist, Z F ist;
- Rₐ eine von Fluoratomen freie Polyoxyalkylenkette ist, wobei die Kette von 4 bis 50 fluorfreie Oxyalkyleneinheiten umfasst, wobei die Einheiten gleich oder voneinander verschieden sind und ausgewählt sind aus -CH₂CH₂O- und -CH₂CH(J)O-, wobei J ein lineares oder verzweigtes Alkyl oder Aryl ist, vorzugsweise Methyl, Ethyl oder Phenyl;
- R₆ und R₇ unabhängig ein Wasserstoff, eine Methyl- oder eine Benzylgruppe sind, mit der Maßgabe, dass R₆ und R₇ nicht beide Wasserstoff sein können;
- X' ein Chlor-, ein Brom- oder ein Iodatom ist, vorzugsweise ein Bromatom;
- A -Rₐ-C(=O)-C(R₆R₇)-X' ist, wobei Rₐ, R₆, R₇ und X' wie vorstehend definiert sind, oder eine lineare oder verzweigte C₁-C₄-(Per)fluoralkylgruppe ist, wobei ein Fluoratom durch ein Chloratom oder ein Wasserstoffatom ersetzt sein kann.

13. Polymer (PFPE_{I}) gemäß Anspruch 12 mit der Formel R_{f}[CF₂CF₂O-(CH₂CH₂O)ₙ-C(=O)-C(CH₃)₂-Br]₂.

14. Zusammensetzung (S) umfassend ein Polymer gemäß einem der Ansprüche 1 bis 8 und wenigstens ein Lösungsmittel.

15. Verfahren zur Beschichtung wenigstens einer Oberfläche eines Substrats, vorzugsweise ausgewählt aus Kunststoff, Metall und Glas, wobei das Verfahren umfasst:
(i) Inkontaktbringen eines Substrats mit der Zusammensetzung (S) und
(ii) Trocknen der Zusammensetzung (S) auf das Substrat.

## Revendications

1. Polymère (per)fluoropolyéther [polymère (PFPE_{A})] comprenant :
- au moins une chaîne (per)fluoropolyoxyalkylène [chaîne (R_{f})] ayant deux extrémités de chaîne ;
- au moins une chaîne (poly)oxyalkylène [chaîne (Rₐ)] liée à au moins une extrémité de chaîne de ladite chaîne (R_{f}), ladite chaîne (Rₐ) comprenant au moins un motif oxyalkylène exempt de fluor ; et
- au moins un motif répétitif de monomère (méth)acrylique [motif (MA)] de formule (I): 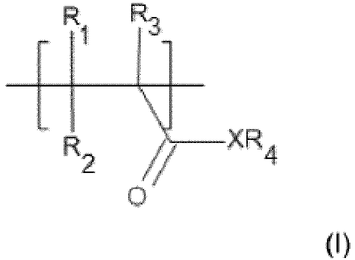
- R₁, R₂ et R₃, égaux ou différents les uns des autres, étant indépendamment choisis parmi un atome d'hydrogène et un groupe C₁-C₃ hydrocarboné ;
- X étant un atome d'oxygène, un atome de soufre ou un groupe NR₈, R₈ étant choisi parmi un atome d'hydrogène et un groupe C₁-C₃ hydrocarboné ;
- R₄ étant un atome d'hydrogène ou un groupement de chaîne C₂-C₂₀ hydrocarbonée, ledit groupement de chaîne C₂-C₂₀ hydrocarbonée comprenant éventuellement au moins un groupe fonctionnel (FG) ;
ledit au moins un motif (MA) étant lié à ladite au moins une chaîne (Rₐ) via un groupe de liaison (LG) de formule
*-(C=O)-R₅-**
R₅ étant un groupe C₁-C₈ alkylène ou cycloalkylène ayant au moins un atome de carbone secondaire ou tertiaire,
le symbole (*) indiquant la liaison à ladite chaîne (Rₐ), et
le symbole (**) indiquant la liaison auxdits motifs (MA) par le biais dudit atome de carbone secondaire ou tertiaire.

2. Polymère (PFPE_{A}) selon la revendication 1, la chaîne (R_{f}) étant une chaîne (per)fluoropolyoxyalkylène ayant un poids moléculaire moyen en nombre Mₙ dans la plage de 100 à 8 000, préférablement de 300 à 6 000, plus préférablement de 800 à 3 000, et comprenant, préférablement constituée par, des motifs répétitifs, qui peuvent être égaux ou différents les uns des autres, choisis parmi :
(i) -CFY'O-, Y' étant F ou CF₃,
(ii) -CFY'CFY'O-, Y', égaux ou différents en chaque occurrence, étant comme définis ci-dessus, à la condition qu'au moins l'un parmi Y' soit -F,
(iii) -CF₂CF₂CW₂O-, chacun parmi W, égaux ou différents les uns des autres, étant F ou H,
(iv) -CF₂CF₂CF₂CF₂O-,
(v) -(CF₂)ⱼ-CFZ'-O-, j étant un entier de 0 à 3 et Z' étant un groupe de formule générale -OR_{f}'T, R_{f}' étant une chaîne fluoropolyoxyalcène comprenant un nombre de motifs répétitifs de 0 à 10, lesdits motifs répétitifs étant choisis parmi les suivants : -CFY"O- , -CF₂CFY"O-, - CF₂CF₂CF₂O-, -CF₂CF₂CF₂CF₂O-, chacun parmi chacun parmi Y" étant indépendamment F ou CF₃ et T étant un groupe C₁-C₃ perfluoroalkyle.

3. Polymère (PFPE_{A}) selon la revendication 2, la chaîne (R_{f}) étant choisie parmi les formules **(R_{f}-I), (R_{f}-IIA), (Rf-IIB), (R_{f}-IIC), (R_{f}-IID), (R_{f}-IIE)** ou (R_{f}-III) ci-dessous :
**(R_{f}-I)** **-[(CFX¹O)_{g1}(CF^{X}2CFX³O)_{g2}(CF₂CF₂CF₂O)_{g3}(CF₂CF₂CF₂CF₂O)_{g4}]-**
- X¹ étant indépendamment choisi parmi -F et -CF₃,
- X², X³, égaux ou différents l'un de l'autre et en chaque occurrence, étant indépendamment -F, -CF₃, à la condition qu'au moins l'un parmi X¹ à X³ soit -F ;
- g1, g2, g3, et g4, égaux ou différents les uns des autres, étant indépendamment des entiers ≥ 0, de sorte que g1 + g2 + g3 + g4 soit dans la plage de 2 à 300, préférablement de 2 à 100 ; si au moins deux parmi g1, g2, g3 et g4 sont différents de zéro, les différents motifs répétitifs étant généralement distribués de manière statistique le long de la chaîne ;
**(R_{f}-IIA)** **-[(CF₂CF₂O)ₐ₁(CF₂O)ₐ₂]-**
- a1 et a2 étant indépendamment des entiers ≥ 0 de sorte que le poids moléculaire moyen en nombre soit compris entre 400 et 10 000, préférablement entre 400 et 5 000 ; à la fois a1 et a2 étant préférablement différents de zéro, le rapport a1/a2 étant préférablement compris entre 0,1 et 10 ;
**(R_{f}-IIB)** **-[(CF₂CF₂O)_{b1}(CF₂O)_{b2}(CF(CF₃)O)_{b3}(CF₂CF(CF₃)O)_{b4}]-**
b1, b2, b3, b4, étant indépendamment des entiers ≥ 0 de sorte que le poids moléculaire moyen en nombre soit compris entre 400 et 10 000, préférablement entre 400 et 5 000 ; préférablement b1 étant 0, b2, b3, b4 étant > 0, le rapport b4/(b2 + b3) étant ≥ 1 ;
**(R_{f}-IIC)** **-((CF₂CF₂O)_{c1}(CF₂O)_{c2}(CF₂(CF₂)_{cw}CF₂O)_{c3}]-**
cw = 1 ou 2 ;
c1, c2, et c3 étant indépendamment des entiers ≥ 0 choisis de sorte que le poids moléculaire moyen en nombre soit compris entre 400 et 10 000, préférablement entre 400 et 5 000 ; préférablement c1, c2, et C3 étant tous > 0, le rapport c3/(c1 +c2) étant plus faible que 0,2 ;
**(R_{f}-IID)** **-[(CF₂CF(CF₃)O)_{d}]-**
d étant un entier > 0 de sorte que le poids moléculaire moyen en nombre soit compris entre 400 et 10 000, préférablement entre 400 et 5 000 ;
**(R_{f}-IIE)** **-[(CF₂CF₂C(Hal*)₂O)ₑ₁-(CF₂CF₂CH₂O)ₑ₂-(CF₂CF₂CH(Hal*)O)ₑ₃]-**
- Hal*, égaux ou différents en chaque occurrence, étant un halogène choisi parmi des atomes de fluor et de chlore, préférablement un atome de fluor ;
- e1, e2, et e3, égaux ou différents les uns des autres, étant indépendamment des entiers ≥ 0 de sorte que la somme (e1+e2+e3) soit comprise entre 2 et 300 ;
**(R_{f}-III)** **-[(CF₂CF₂O)ₐ₁(CF₂O)ₐ₂]-**
- a1, et a2 étant des entiers > 0 de sorte que le poids moléculaire moyen en nombre soit compris entre 400 et 10 000, préférablement entre 400 et 5 000, le rapport a1/a2 étant compris entre 0,1 et 10, plus préférablement entre 0,2 et 5.

4. Polymère (PFPE_{A}) selon la revendication 1, la chaîne (Rₐ) étant une chaîne polyoxyalkylène exempte d'atomes de fluor, ladite chaîne comprenant de 1 à 50 motifs oxyalkylène exempts de fluor, lesdits motifs étant les mêmes ou différents les uns des autres et ayant la formule générale : 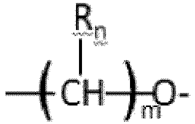 Rₙ étant en chaque occurrence indépendamment un hydrogène, un groupe alkyle inférieur ou un groupe alcoxy inférieur, et m étant un entier de 1 à 10.

5. Polymère (PFPE_{A}) selon la revendication 4, les motifs oxyalkylène exempts de fluor étant choisis parmi -CH₂CH₂O- et -CH₂CH(J)O-, J étant un alkyle linéaire ou ramifié ou aryle, préférablement méthyle, éthyle ou phényle.

6. Polymère (PFPE_{A}) selon l'une quelconque des revendications 4 ou 5, la chaîne Rₐ répondant à la formule (Rₐ-I) ci-dessous :
**(Rₐ-I)** **-(CH₂CH₂O)ᵣ(CH₂GH(CH₃)O)ₛ(CH₂CH(CH₂CH₃)O)ₜ(CH₂CH(Ph)O)ᵤ-**
r, s, t et u étant indépendamment choisis parmi 0 et un nombre positif, r + s + t + u étant dans la plage de 1 à 50, préférablement de 1 à 15, plus préférablement de 1 à 10.

7. Polymère (PFPE_{A}) selon la revendication 1, l'au moins un groupe fonctionnel (FG) étant choisi dans le groupe constitué par des groupes hydroxyle, des groupes éther, des groupes oxyalkylène, des groupes polyoxyalkylène, des groupes acides carboxylique, des groupes amine, des groupes amide, des groupes contenant halogène, y compris des groupes fluoro et perfluoro, des atomes d'halogène, des groupes phosphate, des groupes ester, des groupes siloxane et des groupes polysiloxane.

8. Polymère (PFPE_{A}) selon la revendication 1, le groupe de liaison (LG) étant choisi parmi les formules (LG-I) ou (LG-II) :
**(LG-I)** ***-(C=O)-C(R₆R₇)-****
R₆ et R₇ étant indépendamment un hydrogène, un groupe méthyle ou un groupe benzyle, à la condition que R₆ et R₇ ne puissent pas être tous deux hydrogène,
**(LG-II)** ***-(C=O)-C(CH₃)₂-**.**

9. Procédé pour la fabrication de polymères (PFPE_{A}) selon l'une quelconque des revendications 1 à 8, le procédé comprenant les étapes suivantes :
a) fourniture d'un macroinitiateur de PFPE [polymère (PFPEᵢ)] comprenant :
- au moins une chaîne (per) fluoropolyoxyalkylène [chaîne (R_{f})];
- au moins une chaîne (poly)oxyalkylène [chaîne (Rₐ)] liée à au moins un côté de ladite chaîne (R_{f}), ladite chaîne (Rₐ) comprenant au moins un motif oxyalkylène exempt de fluor ; et
- au moins un groupe de formule ***-(C=O)-R₅-X',** R₅ étant un groupe C₁-C₈ alkylène ou cycloalkylène comprenant au moins un atome de carbone secondaire ou tertiaire, X' étant un halogène, l'halogène étant lié à R₅ via ledit atome de carbone secondaire ou tertiaire, le symbole (*) indiquant la liaison à ladite chaîne (Rₐ) ;
b) mise en réaction de l'initiateur fourni dans l'étape a) par polymérisation radicalaire par transfert d'atome (ATRP) avec au moins un monomère (méth)acrylique [monomère (MM)] de formule (II) : 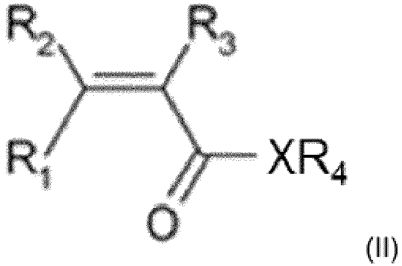
- R₁, R₂ et R₃, égaux ou différents les uns des autres, étant indépendamment choisis parmi un atome d'hydrogène et un groupe C₁-C₃ hydrocarboné ;
- X étant un atome d'oxygène, un atome de soufre ou un groupe NR₈, R₈ étant choisi parmi un atome d'hydrogène et un groupe C₁-C₃ hydrocarboné ;
- R₄ étant un atome d'hydrogène ou un groupement de chaîne C₂-C₂₀ hydrocarbonée, ledit groupement de chaîne C₂-C₂₀ hydrocarbonée comprenant éventuellement au moins un groupe fonctionnel (FG) ;
en la présence d'au moins un catalyseur de métal de transition et d'un ligand pour obtenir un polymère (PFPE_{A}) ; et
c) purification du polymère (PFPE_{A}) obtenu dans l'étape b) pour éliminer l'au moins un catalyseur de métal de transition.

10. Procédé selon la revendication 9, l'au moins un groupe de formule ***-(C=O)-R₅-X'** répondant à la formule
***-(C=O)-C(R₆R₇)-X'**
R₆ et R₇ étant indépendamment un hydrogène, un groupe méthyle ou un groupe benzyle, à la condition que R₆ et R₇ ne puissent pas être tous deux hydrogène, et X' étant un atome de chlore, un atome de brome ou un atome d'iode.

11. Polymère (PFPEᵢ) comprenant :
- au moins une chaîne (per)fluoropolyoxyalkylène [chaîne (R_{f})] ;
- au moins une chaîne (poly)oxyalkylène [chaîne (Rₐ)] liée à au moins un côté de ladite chaîne (R_{f}), ladite chaîne (Rₐ) comprenant au moins un motif oxyalkylène exempt de fluor ; et
- au moins un groupe de formule ***-(C=O)-R₅-X'**, R₅ étant un groupe C₁-C₈ alkylène ou cycloalkylène comprenant au moins un atome de carbone secondaire ou tertiaire, X' étant un halogène, l'halogène étant lié à R₅ via ledit atome de carbone secondaire ou tertiaire, le symbole (*) indiquant la liaison à ladite chaîne (Rₐ).

12. Polymère (PFPEᵢ) selon la revendication 11 de formule (IV) :
**A-O-R_{f}-(CF₂)ₓ-CFZ-CH₂-O-Rₐ-C(=O)-C(R₆R₇)-X'** **(IV)**
- R_{f} étant une chaîne (per)fluoropolyoxyalkylène ayant un poids moléculaire moyen en nombre Mₙ dans la plage de 100 à 8 000, préférablement de 300 à 6 000, plus préférablement de 800 à 3 000, et comprenant, préférablement constituée par, des motifs répétitifs, qui peuvent être égaux ou différents les uns des autres, choisis parmi :
(i) -CFY'O-, Y' étant F ou CF₃,
(ii) -CFY'CFY'O-, Y', égaux ou différents en chaque occurrence, étant comme définis ci-dessus, à la condition qu'au moins l'un parmi Y' soit -F,
(iii) -CF₂CF₂CW₂O-, chacun parmi W, égaux ou différents les uns des autres, étant F ou H,
(iv) -CF₂CF₂CF₂CF₂O-,
(v) -(CF₂)ⱼ-CFZ'-O-, j étant un entier de 0 à 3 et Z' étant un groupe de formule générale -OR_{f}'T, R_{f}' étant une chaîne fluoropolyoxyalcène comprenant un nombre de motifs répétitifs de 0 à 10, lesdits motifs répétitifs étant choisis parmi les suivants : -CFY"O- , -CF₂CFY"O-, - CF₂CF₂CF₂O-, -CF₂CF₂CF₂CF₂O-, chacun parmi chacun parmi Y" étant indépendamment F ou CF₃ et T étant un groupe C₁-C₃ perfluoroalkyle ;
- Z étant fluor ou CF₃ ;
- x étant 0 ou 1, à la condition que, si, x est 1, Z soit F ;
- Rₐ étant une chaîne polyoxyalkylène exempte d'atomes de fluor, ladite chaîne comprenant de 4 à 50 motifs oxyalkylène exempts de fluor, lesdits motifs étant les mêmes ou différents les uns des autres et étant choisis parmi -CH₂CH₂O- et -CH₂CH(J)O-, J étant un alkyle linéaire ou ramifié ou aryle, préférablement méthyle, éthyle ou phényle
- R₆ et R₇ étant indépendamment un hydrogène, un groupe méthyle ou un groupe benzyle, à la condition que R₆ et R₇ ne puissent pas être tous deux hydrogène ;
- X' étant un atome de chlore, un atome de brome ou un atome d'iode, préférablement un atome de brome ;
- A étant -Rₐ-C(=O)-C(R₆R₇)-X' , Rₐ, R₆, R₇, et X' étant tels que définis ci-dessus, ou étant un groupe C₁-C₄ (per) fluoroalkyle linéaire ou ramifié, un atome de fluor pouvant être substitué par un atome de chlore ou un atome d'hydrogène.

13. Polymère (PFPEᵢ) selon la revendication 12 ayant la formule
**R_{f}[CF₂CH₂O-(CH₂CH₂O)ₙ-C(=O)-C(CH₃)₂-Br]₂.**

14. Composition (S) comprenant un polymère tel que défini dans l'une quelconque des revendications 1 à 8, et au moins un solvant.

15. Procédé pour le revêtement d'au moins une surface d'un substrat, préférablement choisie parmi plastique, métallique ou verre, ledit procédé comprenant :
(i) la mise en contact d'un substrat avec ladite composition (S) et
(ii) le séchage de ladite composition (S) sur ledit substrat.
